# EUROPÄISCHE PATENTSCHRIFT

(11) **EP 2 855 282 B1**
(45) Veröffentlichungstag und Bekanntmachung des Hinweises auf die Patenterteilung: **17.08.2016**
(21) Anmeldenummer: 13733998.2
(22) Anmeldetag: 24.06.2013
(51) Int. Cl.: B65B 35/54, B65B 65/00, B65G 47/48, B65G 47/71, B65G 65/00, B65G 1/137

(54) **VERFAHREN UND VORRICHTUNG ZUM TRANSPORT VON GEGENSTÄNDEN AUS ABGEBENDEN STATIONEN IN AUFNEHMENDE STATIONEN**
METHOD AND APPARATUS FOR TRANSFERRING ARTICLES FROM DISTRIBUTION STATIONS TO RECEIVING STATIONS
PROCÉDÉ ET APPAREIL POUR TRANSFÉRER DES ARTICLES À PARTIR DE STATIONS DE DISTRIBUTION VERS DES STATIONS DE RÉCEPTION

(30) Priorität: 10.07.2012 DE 102012211977
(43) Veröffentlichungstag der Anmeldung: 08.04.2015
(73) Patentinhaber: Siemens Aktiengesellschaft, 80333 München (DE)
(72) Erfinder: SCAGLIOLA, Andrea, 92260 Ammerthal (DE)
(86) Internationale Anmeldenummer: PCT/EP2013/063147
(87) Internationale Veröffentlichungsnummer: WO 2014/009138

(56) Entgegenhaltungen:
- EP-A2- 1 852 354
- BE-A- 516 419
- DE-A1- 2 417 733
- US-A- 5 174 430

## Beschreibung

Die Erfindung betrifft eine Transport-Vorrichtung und ein Transport-Verfahren, um mehrere Gegenstände, insbesondere Postpakete, aus verschiedenen abgebenden Stationen in dieselbe aufnehmende Station zu verbringen.

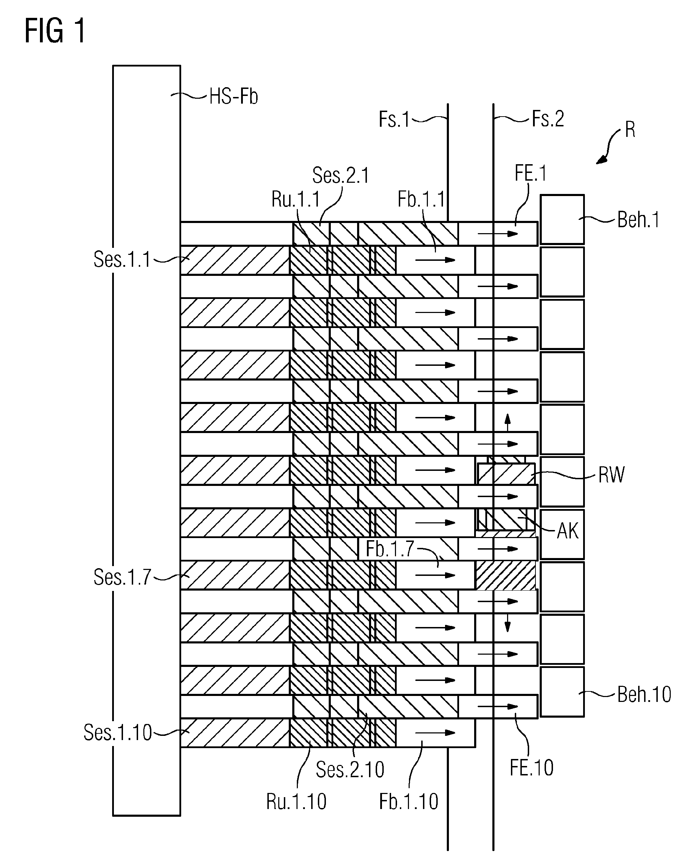

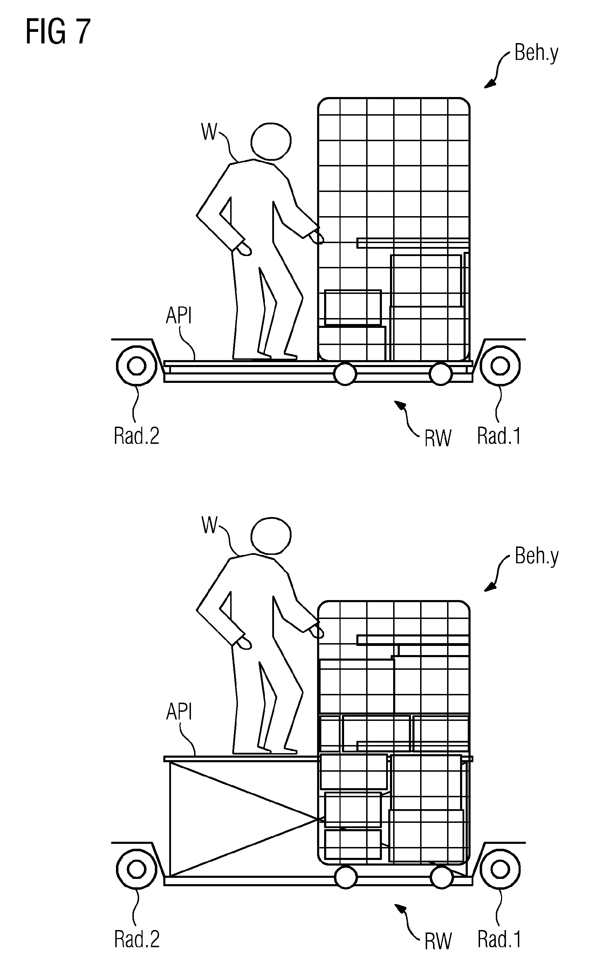

In EP 2452900 A2 werden ein Verfahren und eine Vorrichtung beschrieben, um Paletten zu kommissionieren. Eine Station 1 belädt und entlädt ein Kommissionierlager 5 mit Paletteneinheiten, vgl. Fig. 1. Dieses Lager 5 ist als Regallager mit zwei parallelen Regalreihen 2, 3 ausgestaltet. Ein Regalbediengerät 9 lässt sich entlang eines Regalgassenpfades 8 in einer Gasse 4 zwischen den beiden parallelen Regalreihen 2, 3 hin- und herbewegen. Dieses Bediengerät 9 kann jeden Lagerplatz der Regalreihen 2, 3 erreichen und kann Paletteneinheiten einlagern und wieder aus den Regalreihen 2, 3 entnehmen. Die Regalreihe 2 befindet sich zwischen der Gasse 4 mit dem Bediengerät 9 und einem Transportpfad 6. Entlang dieses Transportpfads 6 lässt sich ein Querschiebewagen 7 verschieben. Der Wagen 7 vermag Paletten von der Station 1 aufzunehmen und entlang des Transportpfads 6 zur Regalreihe 2 verbringen. Der Wagen 7 nimmt eine Palette von einer Anlieferstation 10 auf und vermag diese Palette wiederum an eine Abgabestation 11 abzugeben. Der Wagen 7 greift in der Anlieferstation 10 mit Greifeinrichtungen eine Paletteneinheit auf einer Paletteneingangseinheit und verbringt diese Palette zur Regalreihe 2 und lagert sie ein. Das Regalbediengerät 9 vermag eine Palette in der Regalreihe 2 zu greifen und auf einen anderen Platz im Kommissionierlager 5 zu verbringen. Eine Rollcontainer-Paletten-Beladestation 12 an einer Abgabestation 11 nimmt über einen Zulieferpfad 17 leere Rollcontainer auf, vgl. Fig. 7, damit diese leeren Rollcontainer beladen werden können.

In DE 375173 A1 wird eine Vorrichtung beschrieben, welche Plattenvorlagen in Platten zerlegt und diese Platten sortiert. Eine Längssäge 12 zerlegt eine Plattenvorlage 15, die auf einer Bahn 14 zur Längssäge 12 transportiert wird, so dass die Plattenvorlage 15 in mehrere parallele Streifen 16 zerlegt wird, vgl. Fig. 1. Eine nachfolgende Quersäge 13 zerlegt jeden Streifen 16 in Zuschnitte 17, also in einzelne rechteckige Platten, die unterschiedlich groß sein können. Die Platten 17 werden auf ein Abstreiftablett 19 verbracht. Das Tablett 19 ist an einem Wagen 20 befestigt, welcher sich auf zwei parallelen Schienen 21 in zwei Richtungen (Doppelpfeil A) verschieben lässt. Eine Abstreifleiste 22 lässt sich in eine gewünschte Position parallel zur Laufrichtung des Wagens 20 verschieben. Diese Leiste 22 verschiebt Platten 17 in Richtung B parallel zu den Schienen 21 vom Tablett 19 herunter und auf mehrere parallele Rollenbahnen 23, 24, wobei diese Rollenbahnen 23, 24 sich unterhalb des Tabletts 19 befinden und die Platten 17 aufnehmen. Zum Abstreifen wird das Tablett 19 in Richtung B und parallel zur Längsrichtung der beiden parallelen Rollenbahnen 23, 24 verschoben, und die Leiste 22 streift Platten 17 vom Tablett ab. Oder ein Wagen 28 trägt die Leiste 22 und fährt ebenfalls auf den Schienen 21. Im Beispiel von Fig. 1 ist die Rollenbahn 23 höhenverstellbar auf einem Hubtisch 25 angeordnet. Außerdem fahren drei Rollenbahnen 24 hintereinander auf den Schienen 21. Die Platten 17 werden abhängig von ihren Formaten auf mehrere parallele Zuführ-Rollenbahnen 27 verteilt, die sich in einer Reihe entlang der Schiene 21 erstrecken. Jede Rollenbahn 23, 24 fährt mit einem eigenen Antrieb auf den Schienen 21 bis auf die Höhe einer ausgewählten Zuführ-Rollenbahn 27. Die Rollenbahn 23, 24 gibt dann die Platten 17, die auf der Rollenbahn 23, 24 liegen, - oder wenigstens eine Platte 17 - durch eine Querbewegung in Richtung D senkrecht zu den Schienen 21 auf die ausgewählte Zuführ-Rollenbahn 27 ab. Eine Rollenbahn 23, 24 kann mehrere Platten 17 tragen und diese Platten 17 auf unterschiedliche Zuführ-Rollenbahnen 27 verteilen. Jede Rollenbahn 23, 24 wird abhängig von einer vorgegebenen Programmierung oder von Lichtschranken-Signalen auf der Fahrt entlang der Schienen 21 gestoppt, um Platten abzugeben, und danach wieder gestartet.

In DE 19729556 C1 wird eine Anlage mit mehreren Transportwagen 3 beschrieben, wobei die Anlage zur Herstellung von Keramikprodukten ausgestaltet ist. Mehrere Keramikprodukte werden auf einen Transportwagen 3 verbracht. Jeder beladene Wagen 3 wird auf Schienen durch einen Tunnelofen 3 mit einem Trockner 2 geschoben. Eine Drehscheibe 4' hinter dem Ausgang des Tunnelofens 1 dreht den beladenen Wagen 3 um 90 Grad. Der gedrehte Wagen 3 wird dann auf eine Schiebebühne 5 verbracht, die sich parallel zur Längsrichtung des Tunnelofens 1 erstreckt. Zwischen der Schiebebühne 5 und dem Tunnelofen 1 befindet sich eine Reihe von Abstellplätzen 8 für jeweils einen Transportwagen 3. Jeder Transportwagen 3 lässt sich entlang der Schiebebühne 5 verschieben und durch eine Verschiebung quer zur Längsrichtung der Verschiebebühne 5 auf ein Abstellgleis eines ausgewählten Abstellplatzes 8 verbringen. Durch eine entgegengesetzte Querbewegung wird der Wagen 3 wieder auf die Schiebebühne 5 verbracht. Die Schiebebühne 5 befindet sich zwischen den Abstellplätzen 8 und einer Reihe mit mehreren Beladeeinrichtungen 9, 9''' und mehreren Entladeeinrichtungen 9', 9''. In einer Entladeeinrichtung 9', 9'' werden fertige Keramikprodukte von einem Wagen 3 entnommen. Umgekehrt lässt sich in einer Beladestation 9, 9''' ein Wagen 3 mit Keramikprodukten beladen, die in den Tunnelofen 1 zu verbringen sind. Die Schiebebühne 5 und der Tunnelofen 1 gehören zu einer geschlossenen Transportstrecke.

In der DE 10 2009 058 125 A1 ist eine Transportvorrichtung zur Verteilung von verschiedenen Stückgütern beschrieben. Weitere Transportvorrichtungen sind aus der DE 196 20 635 A1 und WO 2005/118 436 A1 bekannt.

In DE 24 17 733 wird eine Transport-Vorrichtung gemäss dem Oberbegriff des Anspruchs 1 offenbart.

Der Erfindung liegt die Aufgabe zugrunde, eine Transport-Vorrichtung und ein Transport-Verfahren bereitzustellen, durch welche mehrere Gegenstände aus mehreren abgebenden Stationen einer abgebenden Einrichtung in mehrere aufnehmende Stationen einer aufnehmenden Einrichtung transportiert werden. Bei diesem Transport sollen Gegenstände aus verschiedenen abgebenden Stationen in dieselbe aufnehmende Station verbracht werden. Die Gefahr soll verringert werden, dass ein Gegenstand beim Transportiert-Werden in eine aufnehmende Station einen anderen Gegenstand in derselben aufnehmenden Station beschädigt.

Die Aufgabe wird durch eine Transport-Vorrichtung mit den Merkmalen des Anspruchs 1 und ein Transport-Verfahren mit den Merkmalen des Anspruchs 14 gelöst. Vorteilhafte Ausgestaltungen sind in den Unteransprüchen angegeben.

Durch die lösungsgemäße Vorrichtung und durch das lösungsgemäße Verfahren werden mehrere Gegenstände aus einer abgebenden Einrichtung in eine aufnehmende Einrichtung verbracht.

Die abgebende Einrichtung umfasst
- mehrere erste abgebende Stationen und
- mehrere zweite abgebende Stationen.

Die ersten abgebenden Stationen sind räumlich getrennt und/oder durch eine physikalische Eigenschaft von den zweiten abgebenden Stationen unterschieden. Die ersten abgebenden Stationen sind horizontal oder schräg nebeneinander angeordnet. Die zweiten abgebenden Stationen sind horizontal oder schräg nebeneinander angeordnet.

Die aufnehmende Einrichtung weist mehrere aufnehmende Stationen auf. Diese aufnehmenden Stationen sind senkrecht oder schräg nebeneinander angeordnet.

Vor dem Transportieren befindet sich ein zu transportierender Gegenstand entweder in einer ersten abgebenden Station oder in einer zweiten abgebenden Station. Der Gegenstand wird von der Transport-Vorrichtung in eine aufnehmende Station transportiert.

Die Transport-Vorrichtung umfasst
- eine Förder-Einrichtung,
- einen Wagen und
- eine Führungs-Einrichtung für diesen Wagen.

Die Gegenstände werden aus den ersten abgebenden Stationen mit Hilfe des Wagens in die aufnehmenden Stationen transportiert, Gegenständen aus den zweiten abgebenden Stationen mit Hilfe der Förder-Einrichtung.

Die Förder-Einrichtung transportiert jeden Gegenstand aus einer zweiten abgebenden Station in eine aufnehmende Station. Für diesen Transport aus einer zweiten abgebenden Station wird der Wagen nicht benötigt.

Der Wagen wird dafür verwendet, um einen Gegenstand aus einer ersten abgebenden Station in eine aufnehmende Station zu verbringen. Für diesen Transport wird die Förder-Einrichtung nicht verwendet. Die Führungs-Einrichtung hält den Wagen auf einem Transportpfad, der zwischen den ersten abgebenden Stationen und den aufnehmenden Stationen hindurch führt. Die Führungs-Einrichtung verhindert eine Bewegung des Wagens quer zum Transportpfad.

Der Wagen lässt sich durch eine Bewegung entlang des Transportpfads in eine Aufnahme-Position bezüglich einer ersten abgebenden Station verbringen. In dieser Aufnahme-Position lässt ein Gegenstand sich aus dieser ersten abgebenden Station auf eine Auflage-Komponente des Wagens verbringen. Durch eine Bewegung entlang des Transportpfads lässt der Wagen mitsamt dem Gegenstand auf der Auflage-Komponente sich in eine Abgabe-Position bezüglich einer aufnehmenden Station verbringen. Der Gegenstand lässt sich dann von der Auflage-Komponente in diese aufnehmende Station hinein verbringen. Die Transport-Vorrichtung ist dazu ausgestaltet, diese Schritte zu ermöglichen.

Die Erfindung ermöglicht es, die aufnehmenden Stationen mit Hilfe des Wagens und der Förder-Einrichtung automatisch oder auch manuell zu beladen. Nicht erforderlich ist es, dass ein Werker schwere Gegenstände manuell anhebt oder absenkt.

Die Gegenstände werden aus mindestens vier abgebenden Stationen der abgebenden Einrichtung in mindestens zwei aufnehmende Stationen der aufnehmenden Einrichtung verbracht. Mindestens eine aufnehmende Station nimmt also Gegenstände aus mehreren abgebenden Stationen auf. Die Gegenstände werden also auf die aufnehmenden Stationen verteilt. Dadurch werden die Gegenstände in den -oder zumindest in einigen - aufnehmenden Stationen dichter gepackt als in den abgebenden Stationen. Diese Ausgestaltung spart Platz ein. Denn es werden weniger aufnehmende Stationen als abgebende Stationen benötigt. Die Gegenstände aus den ersten abgebenden Stationen werden mit Hilfe des Wagens und unter Verwendung der Auflage-Komponente in die aufnehmenden Stationen transportiert. Die Gegenstände aus den zweiten abgebenden Stationen werden mit Hilfe der Förder-Einrichtung in dieselben aufnehmenden Stationen transportiert. Diese Ausgestaltung mit einem Wagen für die ersten abgebenden Stationen und einer Förder-Einrichtung für die zweiten abgebenden Stationen ermöglicht es, Gegenstände von zwei unterschiedlichen Gegenstands-Arten auf zwei verschiedene Weisen in dieselbe aufnehmende Station zu transportieren, ohne Gegenstände auf dem Weg von einer abgebenden Station zu einer aufnehmenden Station zwischenspeichern zu müssen. Ausreichend ist es, Gegenstände der ersten Art ausschließlich auf die ersten abgebenden Stationen zu verteilen und Gegenstände der zweiten Gegenstands-Art ausschließlich auf die zweiten abgebenden Stationen. Ermöglicht wird, den Wagen auf den Transport einer ersten Art von Gegenständen, z. B. auf große und/oder schwere Gegenstände, zuzuschneiden. Die Förder-Einrichtung verbringt Gegenstände aus zweiten aufnehmenden Stationen in abgebende Stationen und lässt sich dank der Erfindung auf den Transport von Gegenständen einer zweiten Art von Gegenständen zuschneiden, z. B. auf leichtere und/oder kleinere Gegenstände.

Ermöglicht wird weiterhin, die ersten abgebenden Stationen auf die erste Art von Gegenständen zuzuschneiden und die zweiten abgebenden Stationen auf die zweite Art von Gegenständen. Beispielsweise nehmen die zweiten abgebenden Stationen weniger Platz ein als die ersten abgebenden Stationen, so dass insgesamt Bodenfläche ("footprint") eingespart wird.

Sowohl Gegenstände aus einer ersten abgebenden Station als auch Gegenstände aus einer zweiten abgebenden Station werden in dieselbe aufnehmende Station verbracht. Die Erfindung ermöglicht es, zunächst die erste abgebende Station zu entleeren und die Gegenstände aus dieser ersten abgebenden Station in eine aufnehmende Station zu transportieren und dadurch Gegenstände einer ersten Gegenstands-Art, z. B. große und/oder schwere Gegenstände, in die aufnehmende Station zu verbringen. Erst nachdem die Gegenstände aus der ersten abgebenden Station in die aufnehmende Station transportiert wurden, werden die Gegenstände aus der zweiten abgebenden Station in dieselbe aufnehmende Station transportiert, wodurch dadurch die zweite abgebende Station entleert wird.

Dadurch wird ermöglicht, dass zunächst die Gegenstände der ersten Gegenstands-Art in die aufnehmende Station und erst danach die Gegenstände der zweiten Gegenstands-Art in dieselbe aufnehmende Station gelangen. Diese zeitliche Reihenfolge verringert die Gefahr, dass ein großer oder schwerer Gegenstand beim Transport in die aufnehmende Station auf einen anderen Gegenstand fällt, der sich bereits in dieser aufnehmenden Station befindet. Dieser Vorteil wird insbesondere dadurch erreicht, dass in die erste abgebende Station Gegenstände mit höherem Gewicht oder höherem spezifischem Gewicht verbracht werden und in die zweite abgebende Station weitere Gegenstände für dieselbe aufnehmende Station. Die erste abgebende Station und die zweite abgebende Station lassen sich zeitlich überlappend mit Gegenständen beladen. Danach werden zunächst die erste abgebende Station und danach die zweite abgebende Station in dieselbe aufnehmende Station entleert, indem die Gegenstände in diese aufnehmende Station transportiert werden.

Nicht erforderlich ist es dank der Erfindung, die Gegenstände in zwei Mengen aufzuteilen, während die Gegenstände aus der abgebenden Einrichtung in die aufnehmende Einrichtung transportiert werden. Dies würde oft einen zusätzlichen Zwischenspeicher erfordern, der dank der Erfindung nicht erforderlich ist.

Dank der Erfindung und insbesondere dank des Wagens und der Führungs-Einrichtung wird nur ein Bestandteil benötigt, um nacheinander Gegenstände aus mehreren ersten abgebenden Stationen in aufnehmende Stationen zu verbringen, nämlich der Wagen. Dadurch spart die Erfindung die Notwendigkeit ein, mehrere Wagen oder eine weitere Förder-Einrichtung bereitzustellen und die Bewegungen von mehreren Wagen zu synchronisieren.

Vorzugsweise vermag der eine Wagen jede verwendete erste abgebende Station und jede verwendete aufnehmende Station anzufahren. Dadurch ist der Wagen in der Lage, einen Gegenstand aus jeder ersten abgebenden Station in jede aufnehmende Station zu verbringen.

In einer Ausgestaltung ist jeder ersten abgebenden Station eine aufnehmende Station zugeordnet, und jeder zweiten abgebenden Station ist ebenfalls eine aufnehmende Station zugeordnet. In jede aufnehmende Station werden daher Gegenstände aus mindestens einer zugeordneten ersten abgebenden Station und aus mindestens einer zugeordneten zweiten abgebenden Station gesammelt. Mindestens zwei verschiedene abgebende Stationen beschicken also dieselbe zugeordnete aufnehmende Station. Dank des Wagens kann eine Reihenfolge von den ersten abgebenden Stationen von einer Reihenfolge unter den zugeordneten aufnehmenden Stationen abweichen. Die Zuordnung einer abgebenden Station zu einer aufnehmenden Station lässt sich dank des Wagens im laufenden Betrieb verändern.

In einer Fortbildung dieser Ausgestaltung sollen die Gegenstände gemäß einem vorgegebenen Sortiermerkmal auf die aufnehmenden Stationen verteilt werden. Für jeden Gegenstand wird gemessen, welchen Wert das Sortiermerkmal für diesen Gegenstand annimmt. Ein vorgegebener rechnerauswertbarer Sortierplan ordnet jedem Sortiermerkmals-Wert eines zu transportierenden Gegenstands jeweils sowohl mindestens eine erste abgebende Station als auch mindestens eine zweite abgebende Station zu. Außerdem wird eine physikalische Eigenschaft eines zu sortierenden Gegenstands gemessen, z. B. dessen Gewicht, dessen Volumen, dessen Oberflächenbeschaffenheit, dessen maximale Ausdehnung oder eine sonstige Abmessung.

In einer Ausgestaltung wird für jeden Gegenstand in einer abgebenden Station jeweils eine aufnehmende Station ausgewählt, und zwar vorzugsweise im laufenden Betrieb und automatisch. Der Wagen oder die Förder-Einrichtung verbringen diesen Gegenstand in die ausgewählte aufnehmende Station - der Wagen oder die Förder-Einrichtung, je nach dem, ob der Gegenstand sich zuvor in einer ersten oder in einer zweiten abgebenden Station befand.

Eine vorgegebene rechnerauswertbare Entscheidungsvorschrift, die von dieser physikalischen Eigenschaft abhängt, wird auf die gemessene physikalische Eigenschaft eines zu sortierenden Gegenstands angewandt, um zu entscheiden, ob der Gegenstand in eine erste abgebende Station oder in eine zweite abgebende Station verbracht wird. Indem der Sortierplan und die Entscheidungsvorschrift angewendet werden, wird für den Gegenstand eine abgebende Station ausgewählt. Vorzugsweise werden durch Anwendung des Sortierplans auf den gemessenen Sortiermerkmals-Wert zunächst sowohl mindestens eine erste abgebende Station als auch mindestens eine zweite abgebende Station vorausgewählt, also insgesamt mindestens zwei abgebende Stationen. Durch Anwendung der Entscheidungsvorschrift wird einer dieser mindestens zwei vorausgewählten abgebenden Stationen als die abgebende Station für den Gegenstand ausgewählt. Der Gegenstand wird in diese abgebende Station verbracht. Aus dieser abgebenden Station wird der Gegenstand mittels der Transport-Vorrichtung in die zugeordnete aufnehmende Station verbracht.

In einer Ausgestaltung ist jeder Gegenstand an einen vorgegebenen Zielpunkt zu transportieren. Der Schritt, für einen Gegenstand dessen Sortiermerkmals-Werte zu ermitteln, umfasst den Schritt, den für diesen Gegenstand vorgegebenen Zielpunkt zu ermitteln, also den Zielpunkt, an den dieser Gegenstand zu transportieren ist. Beispielsweise wird per Zeichenerkennung ("optical character recognition", OCR) eine Zielpunkt-Kennzeichnung in einer von einem Menschen lesbaren Form entziffert, die auf den Gegenstand aufgebracht ist. Oder eine eindeutige Kennung ("ID code"), mit welcher der Gegenstand versehen ist, wird entziffert, und in einer Datenbank wird eine Zielpunkt-Kennzeichnung für diese Gegenstands-Kennung ermittelt. Oder auf den Gegenstand ist eine maschinenlesbare Kennung des Zielpunkts ("sorting code") aufgebracht.

Eine Anordnung in Form einer Sortieranlage verteilt die Gegenstände abhängig von den ermittelten Zielpunkten und der jeweiligen physikalischen Eigenschaft auf die abgebenden Stationen. Die Gegenstände werden in aufnehmende Stationen verbracht. Mehrere Gegenstände in derselben aufnehmenden Station werden gemeinsam abtransportiert. Als abgebende Stationen fungieren z. B. die Sortierausgänge einer Sortieranlage. Die aufnehmende Station ist z. B. ein Container, ein sonstiger Behälter, ein Rollbehälter mit eigenem Fahrwerk oder ein Transportfahrzeug oder ein Anhänger eines solchen Transportfahrzeugs.

In einer Ausgestaltung transportiert die Förder-Einrichtung einen Gegenstand aus einer zweiten abgebenden Station über die Führungs-Einrichtung und somit auch über den Wagen mit der Auflage-Komponente hinweg zu einer aufnehmenden Station. Weil die Förder-Einrichtung oberhalb der Führungs-Einrichtung und oberhalb des Wagens angeordnet ist, wird weniger Bodenfläche ("footprint") benötigt als bei einer Anordnung mit der Förder-Einrichtung und dem Wagen in einer einzigen Ebene.

Die Gegenstände aus mindestens einer ersten abgebenden Station und aus mindestens einer zweiten abgebenden Station werden in dieselbe aufnehmende Station verbracht. Möglich ist, dass mehrere Gegenstände in der aufnehmenden Station übereinander liegen oder gelegt werden. Die Ausgestaltung mit der Führungs-Einrichtung oberhalb des Wagens ermöglicht es, dass mit besonders großer Sicherheit verhindert wird, dass ein schwerer Gegenstand einen anderen Gegenstand in derselben aufnehmenden Station beschädigt. Ein schwerer Gegenstand lässt sich in eine erste abgebende Station verbringen, und zuerst werden alle Gegenstände aus dieser ersten abgebenden Station in die zugeordnete aufnehmende Station verbracht und erst dann die Gegenstände aus der zweiten abgebenden Station in dieselbe aufnehmende Station.

In einer Ausgestaltung zieht eine Wagen-Förder-Einrichtung einen Gegenstand aus einer ersten abgebenden Station heraus. Ein erster Schieber, der vorzugsweise ein Bestandteil des Wagens ist, schiebt den Gegenstand von der Wagen-Förder-Einrichtung auf die Auflage-Komponente, und zwar durch eine Bewegung, insbesondere eine Linearbewegung, parallel zum Transportpfad. Die Wagen-Förder-Einrichtung wird dadurch frei zum Aufnehmen eines weiteren Gegenstands, auch eines Gegenstands aus einer anderen ersten abgebenden Station. Der Wagen umfasst also vorzugsweise einen ersten Schieber sowie einen Antrieb, der diesen ersten Schieber in zwei Richtungen zu verschieben oder zu verschwenken vermag.

In einer Abwandlung wird ein solcher erster Schieber eingespart. Eine Oberfläche der Wagen-Förder-Einrichtung fungiert selber als Auflage-Komponente. Die Wagen-Förder-Einrichtung nimmt einen Gegenstand aus einer ersten abgebenden Station auf und gibt den Gegenstand später an eine aufnehmende Station ab.

In einer Ausgestaltung wird ein zu transportierender Gegenstand durch eine Bewegung quer zum Transportpfad aus einer ersten abgebenden Station herausgezogen und auf die Auflage-Komponente des Wagens gezogen. In einer Ausgestaltung schiebt ein zweiter Schieber einen Gegenstand von dieser Auflage-Komponente durch eine Bewegung quer zum Transportpfad in eine aufnehmende Station. Der Wagen befindet sich beim Herausziehen in einer Aufnahme-Position bezüglich der ersten abgebenden Station und beim Hineinschieben in einer Abgabe-Position bezüglich der aufnehmenden Station. Zu einer Bewegung quer zum Transportpfad gehört insbesondere eine Linearbewegung senkrecht zum Transportpfad.

Verschiedene Ausgestaltungen der beiden Schieber sind möglich. Beispielsweise gleitet ein Stab oder eine Platte über eine Fläche des Wagens und verschiebt einen Gegenstand über diese Fläche hinweg, wobei der Gegenstand zuvor auf der Fläche stand. Anstelle über eine Fläche kann der Gegenstand auch über Laufrollen hinweg verschoben werden. Zum Schieber gehört vorzugsweise auch ein Antrieb für den Stab bzw. für die Platte. Möglich ist auch, dass angetriebene Rollen den Gegenstand senkrecht zum Transportpfad bzw. parallel zum Transportpfad verschieben.

In einer Ausgestaltung lässt sich die Auflage-Komponente des Wagens um eine Drehachse drehen, die parallel zum Transportpfad verläuft. Die Drehachse verläuft bevorzugt nahe demjenigen Ende der Auflage-Komponente, die den ersten abgebenden Stationen zugewandt und den aufnehmenden Stationen abgewandt ist. Ein Gegenstand wird dadurch von der Auflage-Komponente in eine aufnehmende Station verbracht, dass die Auflage-Komponente um diese Drehachse gedreht wird und der Gegenstand von der gedrehten Auflage-Komponente schräg abwärts in eine aufnehmende Station rutscht. Diese Ausgestaltung ermöglicht es, den Gegenstand weitgehend unabhängig von seiner Oberflächenbeschaffenheit und von einer Reibung zwischen der Oberfläche der Auflage-Komponente und dem Gegenstand in die aufnehmende Station zu verbringen.

In einer Ausgestaltung lässt die Oberfläche der Auflage-Komponente sich im laufenden Betrieb vergrößern und verkleinern, was es erleichtert, einen Gegenstand an einer bestimmten Stelle in eine aufnehmende Station zu verbringen. Eine bewegliche Komponente ist mit der Auflage-Komponente mechanisch verbunden und bildet zusammen mit der Auflage-Komponente eine durchgehende Oberfläche. Diese bewegliche Komponente lässt sich in eine aufnehmende Station hineinfahren und wieder aus der aufnehmenden Station herausziehen. Dadurch lässt sich die durchgehende Oberfläche bis hin zu einer gewünschten Position in der aufnehmenden Station vergrößern.

Vorzugsweise umfasst die Transport-Vorrichtung ein Bildaufnahmegerät und eine Bildauswerteeinheit. Das Bildaufnahmegerät erzeugt mindestens ein Abbild von einer aufnehmenden Station, in die hinein ein Gegenstand verbracht werden soll. Die Bildaufnahmeeinheit ermittelt durch Auswertung des Abbilds einen Platz für den Gegenstand in der aufnehmenden Station. Eine Steuereinheit steuert einen Antrieb für einen Schieber oder für die Auflage-Komponente so an, dass der Gegenstand an die gewünschte Stelle in der aufnehmenden Station verbracht wird.

In einer Ausgestaltung hat der Wagen mit der Auflage-Komponente einen eigenen Antrieb. In einer anderen Ausgestaltung lässt sich der Wagen schieben und ziehen und hat keinen eigenen Antrieb. Vorzugsweise vermag ein Werker einen Griff zu fassen, der mit einem Gestell des Wagens mechanisch verbunden ist, und den Wagen an diesem Griff zu ziehen und zu schieben.

In einer Ausgestaltung hält eine mechanische Führungs-Einrichtung mit mindestens einer Schiene den Wagen auf dem Transportpfad und verhindert, dass der Wagen quer zum Transportpfad verschoben wird. In einer anderen Ausgestaltung umfasst die Führungs-Einrichtung mindestens einen PositionsSensor sowie eine Aktorik an Bord des Wagens. Der PositionsSensor misst die aktuelle Position des Wagens. Die Aktorik lenkt oder steuert den Wagen und hält den Wagen auf diese Weise auf dem Transportpfad. Diese Ausgestaltung spart Schienen ein.

In einer Ausgestaltung besitzt der Wagen eine Arbeitsplattform für einen Werker. Diese Arbeitsplattform lässt sich vorzugsweise anheben und absenken. Ein Werker, der auf der Arbeitsplattform steht und arbeitet, verbringt nacheinander jeweils mindestens einen Gegenstand aus einer ersten abgebenden Station auf die Auflage-Komponente und später diesen Gegenstand von der Auflage-Komponente in eine aufnehmende Station.

Die zu transportierenden Gegenstände sind z. B. Postpakete, Frachtstücke, Gepäckstücke von Reisenden oder Werkstücke in einer Produktionsanlage.

Im Folgenden wird die Erfindung anhand eines Ausführungsbeispiels beschrieben. Dabei zeigen:
- Fig. 1: die Sortieranlage mit den abgebenden Stationen sowie den Wagen, die Führungs-Einrichtung, die FörderEinrichtung und die aufnehmenden Stationen in Draufsicht;
- Fig. 2: in Draufsicht den Wagen mit der Auflage-Komponente, welcher Gegenstände aus einer ersten abgebenden Station in eine aufnehmende Station verbringt;
- Fig. 3: eine Ausgestaltung des Wagens sowie ein FörderElement und eine aufnehmende Station in Vorderansicht;
- Fig. 4: die Anordnung von Fig. 3 mit angehobener Positioniereinheit;
- Fig. 5: die Anordnung von Fig. 4 beim Abladen weiterer Pakete aus einem zweiten Sortierausgang;
- Fig. 6: ein Wagen mit Arbeitsplattform und ein FörderElement in Vorderansicht;
- Fig. 7: die Anordnung von Fig. 6 in Seitenansicht.

Im Ausführungsbeispiel wird die Erfindung eingesetzt, um Postpakete aus mehreren Sortierausgängen einer Paket-Sortieranlage in Behälter zu verbringen. Die Behälter mit den Postpaketen werden danach zu verschiedenen Zielorten abtransportiert. Die verwendete Sortieranlage steht z. B. in einem Paket-Sortierzentrum, und die Pakete werden in den Behältern aus dem Sortierzentrum abtransportiert und in Lkws auf verschiedene Zustellbasen verteilt. Von diesen Zustellbasen werden die Pakete zu ihren jeweiligen Zielpunkten transportiert. Die Behälter, welche die Pakete aufnehmen, fungieren im Ausführungsbeispiel als die aufnehmenden Stationen. Jeder Behälter nimmt jeweils mehrere Pakete auf.

Für jedes Paket ist jeweils ein Zielpunkt vorgegeben, an den dieses Paket zu transportieren ist. In einer Ausgestaltung ist das Paket mit einer Kennzeichnung des Zielpunkts in einer von einem Menschen lesbaren Form versehen. In einer anderen oder zusätzlichen Ausgestaltung ist auf das Paket eine maschinenlesbare Kennzeichnung aufgebracht, z. B. ein Strichmuster ("Bar Code") oder ein Matrix Code. Diese Kennzeichnung codiert entweder den Zielpunkt und ist daher ein "sorting code". Oder die Kennzeichnung ist eine eindeutige Kennung, die dieses Paket von allen anderen Paketen unterscheidet, die innerhalb eines bestimmten Zeitraums zu transportieren sind, d. h. die Kennzeichnung ist ein ID Code. In einer Datenbank ist für diesen ID Code eine Codierung des Zielpunkts hinterlegt. Die Zielpunkt-Kennzeichnung oder eindeutige Kennung ist in einer Ausgestaltung in einem mobilen Datenspeicher abgespeichert, der am Paket befestigt ist, z. B. in einem RFID-Chip.

Die Paket-Sortieranlage umfasst folgende Bestandteile:
- ein Lesegerät,
- eine Auswahleinheit zum Auswählen eines Sortierausgangs,
- zwei Arten von Sortierausgängen zum regulären Ausschleusen von Paketen,
- mindestens einen Sortierausgang für Pakete, die sich nicht regulär verarbeiten und ausschleusen lassen, z. B. für nicht maschinell verarbeitbare Pakete,
- einen Haupt-Sortierer, der Pakete transportiert und alle diese Sortierausgänge bedient, und
- pro Sortierausgang jeweils eine Weiche, welche ein Paket aus dem Haupt-Sortierer in den Sortierausgang umzulenken vermag.

In Fig. 1 werden in Draufsicht folgende Bestandteile der Paket-Sortieranlage gezeigt:
- eine Abfolge von regulären ersten Sortierausgängen Ses.1.1, ..., Ses.1.10 mit jeweils einer Rutsche Ru.1.1, ..., Ru.1.10 und einem nachfolgenden Förderband Bb.1.1, ..., Fb.1.10,
- eine Abfolge von regulären zweiten Sortierausgängen Ses.2.1, ..., Ses.2.10,
- ein Horizontal-Förderband HS-Fb eines Hauptsortierers, wobei das Förderband HS-Fb Pakete in eine horizontale Transportrichtung transportiert und alle ersten Sortierausgänge Ses.1.1, ..., Ses.1.10 und alle zweiten Sortierausgänge Ses.2.1, ..., Ses.2.10 bedient.

In der Draufsicht von Fig. 1 transportiert das Horizontal-Förderband HS-Fb Pakete von oben nach unten.

Das Lesegerät der Paket-Sortieranlage ermittelt für jedes Paket, an welchen Zielpunkt dieses Paket zu transportieren ist. Das Lesegerät entziffert die Zielpunkt-Kennzeichnung, welche in einer von einem Menschen lesbaren Form auf das Paket aufgebracht ist, und gleicht das Entzifferungsergebnis mit einem Wörterbuch ("dictionary") mit gültigen postalischen Adressen ab. Oder das Lesegerät decodiert den "sorting code" oder den "ID code" auf dem Paket. Falls das Paket mit einem "ID code" versehen ist, richtet das Lesegerät eine Suchanfrage an eine Datenbank mit dem "ID code" und erhält als Ergebnis die zu diesem "ID code" abgespeicherte Zielpunkt-Kennzeichnung zurück.

Die Auswahleinheit hat Lesezugriff auf einen vorgegebenen rechnerauswertbaren Sortierplan. Die Auswahleinheit wählt automatisch abhängig vom ermittelten Zielpunkt eines Pakets sowie abhängig von dem angewendeten Sortierplan einen Sortierausgang der Paket-Sortieranlage aus. Das Paket wird später in diesen ausgewählten Sortierausgang verbracht. Die Sortierausgänge der Paket-Sortieranlage fungieren als die abgebenden Stationen im Sinne der Patentansprüche.

Die beiden Arten von Sortierausgängen sind im Ausführungsbeispiel in zwei Reihen angeordnet, nämlich eine erste Reihe mit größeren Sortierausgängen Ses.1.1, ..., Ses.1.10 für die erste Art von Paketen und eine zweite Reihe mit kleineren Sortierausgängen Ses.2.1, ..., Ses.2.10 für die zweite Art von Paketen. Der Sortierplan, den die Auswahleinheit auswertet und anwendet, ordnet jedem auftretenden Zielpunkt jeweils sowohl einen ersten, größeren Sortierausgang Ses.1.1, ..., Ses.1.10 als auch einen zweiten, kleineren Sortierausgang Ses.2.1, ..., Ses.2.10 zu. Jeder erste, größere Sortierausgang Ses.1.1, ..., Ses.1.10 fungiert als eine erste abgebende Station, jeder zweite, kleinere Sortierausgang Ses.2.1, ..., Ses.2.10 fungiert als eine zweite abgebende Station.

Entlang der beiden Reihen von Sortierausgängen erstreckt sich eine Reihe mit Stellplätzen für Behälter. Jeder Behälter-Stellplatz vermag einen Behälter aufzunehmen. In jeden Behälter lassen sich mehrere Postpakete verbringen. Der Behälter ist im Ausführungsbeispiel ein Rollbehälter mit einem eigenen Fahrwerk. Das Fahrwerk des Rollbehälters ist mit einer Bodenplatte verbunden. Auf diese Bodenplatte sind zwei oder auch drei gitterförmige Seitenwände montiert. Der Rollbehälter ist an derjenigen Seite, die den Sortierausgängen zugewandt ist, offen, damit nicht eine Seitenwand das Einstapeln von Paketen behindert. Im Ausführungsbeispiel ist der Rollbehälter auch auf der den Sortierausgängen abgewandten Seite offen.
Der Rollbehälter lässt sich in einer Ausgestaltung auf diesem Stellplatz arretieren, nämlich mit einer Arretiervorrichtung, und wieder dearretieren. Die Arretierung verhindert, dass der arretierte Rollbehälter vom Stellplatz rollt.

Oder der Behälter ist ein Container, der vor dem Beladen auf dem Stellplatz abgestellt wird und nach dem Beladen wieder angehoben und abtransportiert wird.

In Fig. 1 wird in Draufsicht eine Reihe R von Behälter-Stellplätzen für zehn Rollenbehältern Beh.1, ..., Beh.10 gezeigt.

Im Ausführungsbeispiel nimmt jeder Behälter Beh.1, ..., Beh.10 Postpakete aus mindestens einem ersten Sortierausgang Ses.1.1, ..., Ses.1.10 und aus mindestens einem zweiten Sortierausgang Ses.2.1, ..., Ses.2.10 auf. Durch den Schritt, Pakete aus diesen beiden Sortierausgängen in denselben Behälter zu verbringen, und wegen der Abmessungen des Behälters werden zwangsläufig Pakete im Behälter gestapelt. Später verladene Pakete werden auf andere Pakete, die schon im Behälter Beh.1, ..., Beh.10 liegen, geschüttet. Dank der Erfindung wird verhindert, dass ein später verladenes Paket ein anderes Paket, welches sich im Stapel unter dem ersten Paket befindet oder auf welches das erste Paket geschüttet wird, zusammendrückt oder auf andere Weise beschädigt. Die Gefahr einer Beschädigung wäre besonders groß, wenn ein späteres Paket mit hohem spezifischem Gewicht auf ein anderes Paket geschüttet oder geworfen werden würde.

Die Paket-Sortieranlage misst das Gewicht und alle Abmessungen eines Pakets, bevor ein Sortierausgang für das Paket ausgewählt wird. Die Abmessungen werden vorzugsweise gemessen, indem mehrere Abbilder vom Paket aus verschiedenen Betrachtungsrichtungen erzeugt werden und diese Abbilder ausgewertet werden. Die datenverarbeitende Auswahleinheit wendet eine vorgegebene Entscheidungsvorschrift auf die Abmessungen und das Gewicht eines Pakets an, um automatisch zu entscheiden, ob dieses Paket zu einer ersten Art gehört und daher in einen ersten Sortierausgang ausgeschleust wird oder zu einer zweiten Art gehört und daher in einen zweiten Sortierausgang ausgeschleust wird.

In einer Ausgestaltung hängt die Entscheidungsvorschrift vom gemessenen Gewicht eines Pakets und/oder von einer Abmessung dieses Pakets ab. Ein Paket mit hohem Gewicht oder hohem spezifischem Gewicht gelangt durch Anwendung der Entscheidungsvorschrift in einen ersten Sortierausgang, ein leichtes Paket gelangt in einen zweiten Sortierausgang.

Nachdem der Zielpunkt eines Pakets ermittelt und die Abmessungen und das Gewicht gemessen wurden, werden in jeden Behälter zunächst Pakete aus mindestens einem ersten Sortierausgang und danach aus mindestens einem zweiten Sortierausgang verbracht. Dadurch werden Pakete aus einem zweiten Sortierausgang auf Pakete aus einem ersten Sortierausgang geschüttet, aber nicht umgekehrt.

In einer Ausgestaltung sind die zweiten Sortierausgänge schmaler als die ersten Sortierausgänge. Daher ist eine maximale Dicke eines Pakets vorgegeben, wobei die Dicke eine Abmessung in waagerechter Richtung und senkrecht zur Ausschleus-Richtung ist. Für ein Paket wird nur dann ein zweiter Sortierausgang, also ein schmalerer Sortierausgang ausgewählt, wenn die Dicke dieses Pakets geringer als die vorgegebene Maximal-Dicke ist.

Zwischen den beiden Reihen von Sortierausgängen Ses.1.1, ..., Ses.2.10 auf der einen Seite und der Reihe R mit Behälter-Stellplätzen auf der anderen Seite erstreckt sich eine Führungs-Einrichtung für mindestens einen Wagen. Dieser Wagen wird dafür verwendet, um Pakete aus den ersten Sortierausgängen Ses.1.1, ..., Ses.1.10 in die Behälter Beh.1, ..., Beh.10 auf den Behälter-Stellplätzen zu verbringen. Eine Förder-Einrichtung wird dafür verwendet, um Pakete aus den zweiten Sortierausgängen über die Führungs-Einrichtung hinweg in die Behälter auf den Behälter-Stellplätzen zu verbringen.

Fig. 1 zeigt zwei Führungsschienen Fs.1, Fs.2 dieser Führungs-Einrichtung sowie einen Rollwagen RW. Die Führungsschienen Fs.1, Fs.2 laufen unter den Förderelementen FE.1, ..., FE.10 der Förder-Einrichtung für die zweiten Sortierausgänge Ses.2.1, ..., Ses.2.10 hinweg.

In einer Ausgestaltung ist die Anzahl der Behälter-Stellplätze kleiner oder gleich der Anzahl der ersten Sortierausgänge Ses.1.1, ..., Ses.1.10 und kleiner oder gleich der Anzahl der zweiten Sortierausgänge Ses.2.1, ..., Ses.2.10. Jedem Behälter-Stellplatz sind im Ausführungsbeispiel jeweils mindestens ein erster Sortierausgang und mindestens ein zweiter Sortierausgang zugeordnet. Umgekehrt ist jedem Sortierausgang jeweils ein Behälter-Stellplatz zugeordnet.

Dank der Erfindung wird eine Ausgestaltung ermöglicht, bei der sich diese Zuordnung dynamisch verändern lässt, also während Pakete aus ersten oder zweiten Sortierausgängen Ses.1.1, ..., Ses.2.10 in Behälter Beh.1.1, ... Beh.1.10 transportiert werden. In einer Ausführungsform steht stets auf mindestens einem Behälter-Stellplatz ein leerer Behälter, der keinem Sortierausgang zugeordnet ist. Sobald ein anderer Behälter gefüllt ist, wird dieser andere Behälter von seinem Behälter-Stellplatz genommen, und auf diesen Behälter-Stellplatz wird ein leerer Behälter gestellt. Der angewendete Sortierplan wird im laufenden Betrieb geändert. Demjenigen Sortierausgang, dem zuvor der andere, nunmehr gefüllte Behälter-Stellplatz zugeordnet war, wird nunmehr der Behälter-Stellplatz des bislang leeren und nicht zugeordneten Behälters zugeordnet. Diese Ausgestaltung bewirkt, dass der Vorgang, den gefüllten Behälter durch einen leeren Behälter zu ersetzen, nicht zu einer Verzögerung beim Transportieren führt, weil stets ein ausgewählter Behälter Beh.1, ..., Beh.10 zur Verfügung steht und noch Platz bietet.

Die Reihe mit den ersten Sortierausgängen Ses.1.1, ..., Ses.1.10 ist in einer Ausgestaltung etwas höher angeordnet als die Oberfläche des Rollwagens RW, so dass die Pakete aus einem ersten Sortierausgang Ses.1.1, ..., Ses.1.10 schrittweise nach unten gleiten, um auf den Rollwagen RW und später von dort in einen zuvor leeren Behälter Beh.1, ..., Beh.10 zu gelangen. Die Förder-Einrichtung besitzt im Ausführungsbeispiel jeweils ein Förderelement FE.1, ..., FE.10 pro zweiten Sortierausgang Ses.2.1, ..., Ses.2.10, wobei dieses Förderelement vom zweiten Sortierausgang zu einem zugeordneten Behälter-Stellplatz führt. In Fig. 1 werden Förder-Elemente FE.1, ..., FE.10 gezeigt, die von den zweiten Sortierausgängen Ses.2.1, ..., Ses.2.10 zu den Behältern Beh.1, ..., Beh.10 auf den Behälter-Stellplätzen führen.

In einer Ausgestaltung sind die zweiten Sortierausgänge Ses.2.1, ..., Ses.2.10 in einer Ebene senkrecht oder schräg oberhalb der ersten Sortierausgänge Ses.1.1, ..., Ses.1.10 angeordnet. Jedes Förderelement FE.1, ..., FE.10 für einen zweiten Sortierausgang Ses.2.1, ..., Ses.2.10 ist als Verlängerung dieses zweiten Sortierausgangs Ses.2.1, ..., Ses.2.10 ausgestaltet und vermag Pakete in annähernd horizontaler Richtung über die Führungs-Einrichtung mit den Führungsschienen Fs.1, Fs.2 hinweg zu transportieren. Vorzugsweise umfasst jedes Förder-Element FE.1, ..., FE.10 jeweils ein horizontal förderndes Endlos-Förderband.

In einer anderen Ausgestaltung befindet sich jeder zweite Sortierausgang Ses.2.1, ..., Ses.2.10 - außer einem äußeren zweiten Sortierausgang - zwischen zwei ersten Sortierausgängen, und alle ersten und zweiten Sortierausgänge der Paket-Sortieranlage sind in einer Ebene angeordnet. Jedes Förderelement FE.1, ..., FE.10 transportiert Pakete zunächst schräg aufwärts und dann über die Führungs-Einrichtung mit den Führungsschienen Fs.1, Fs.2 hinweg zu den Behältern Beh.1, ..., Beh.10.

Im Folgenden wird ein Wagen beschrieben. Die Draufsicht von Fig. 1 zeigt auch den Rollwagen RW. Dieser Rollwagen RW verbringt Pakete aus einem ersten Sortierausgang Ses.1.1, ..., Ses.1.10 in Behälter Beh.1, ..., Be.10, welche auf Behälter-Stellplätze der Reihe R stehen. Der Rollwagen RW wird von der Führungs-Einrichtung mit den Führungsschienen Fs.1, Fs.2 geführt. Die Führungs-Einrichtung führt diesen Wagen RW entlang eines Transportpfads, der zwischen den ersten Sortierausgängen Ses.1.1, ..., Ses.1.10 auf der einen Seite und den Behälter-Stellplätzen für die Behälter Beh.1, ..., Be.10 auf der anderen Seite hindurch führt. Die Führungsschienen Fs.1, Fs.2 verhindern zusammen mit dem Fahrwerk des Wagens RW, dass der Wagen RW sich quer zu diesem Transportpfad verschieben lässt.

Die Führungs-Einrichtung umfasst im Ausführungsbeispiel die beiden Führungsschienen Fs.1, Fs.2, und der Wagen RW hat ein entsprechendes Fahrwerk mit vier Rädern. Der Wagen lässt sich in beide Richtungen entlang des Transportpfads bewegen, z. B. mit Hilfe eines eigenen Antriebs oder indem ein Werker den Wagen schiebt oder zieht.

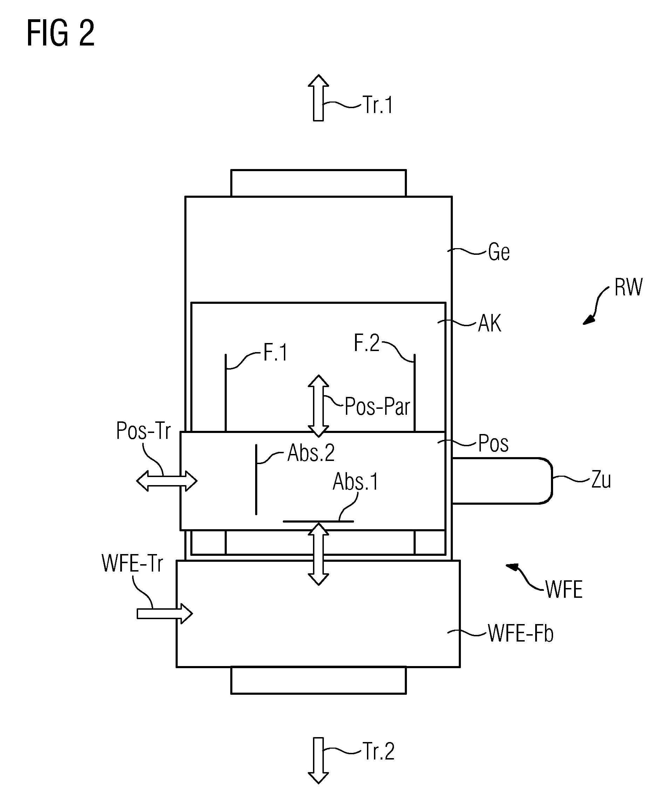

Fig. 2 zeigt in Draufsicht den Rollwagen RW. Der Rollwagen RW lässt sich in die beiden Richtungen Tr.1, Tr.2 von Fig. 2 verschieben.

Der Wagen RW besitzt im Ausführungsbeispiel eine Wagen-Förder-Einrichtung WFE mit einem Endlos-Förderband WFE-Fb und einem nicht gezeigten Antrieb für dieses Endlos-Förderband WFE-Fb. Dieser Antrieb vermag das Endlos-Förderband WFE-Fb in eine Transportrichtung quer zum Transportpfad zu bewegen und abzustoppen. Im Beispiel von Fig. 2 vermag dieser Antrieb das Endlos-Förderband WFE-Fb in Richtung des Pfeils WFE-Tr zu bewegen. Auf dem abgestoppten Endlos-Förderband WFE-Fb kann mindestens ein Paket liegen. Das bewegte Endlos-Förderband WFE-Fb transportiert das Paket in die Transportrichtung WFE-Tr quer zum Transportpfad. Der Wagen RW transportiert das Paket an den Behälter-Stellplätzen der Reihe R mit den Behältern Beh.1, ..., Beh.10 entlang, wenn der Wagen RW entlang des Transportpfads transportiert wird.

Dank des Rollwagens RW lässt sich ein Paket aus einem beliebigen ersten Sortierausgang Ses.1.1, ... Ses.1.10 in einen beliebigen Behälter Beh.1, ..., Be.10 verbringen. Um ein Paket aus einem ersten Sortierausgang Ses.1.1, ..., Ses.1.10 zu übernehmen, wird der Wagen RW in eine Aufnahme-Position bezüglich dieses ersten Sortierausgangs Ses.1.1, ..., Ses.1.10 bewegt, z. B. in eine Position mit minimalem Abstand zu diesem ersten Sortierausgang. Das Endlos-Förderband WFE-Fb greift das Paket von unten und zieht das Paket auf den Wagen RW. Hierbei wird das Paket um eine gerade Strecke senkrecht zum Transportpfad bewegt. Vorzugsweise wird der Wagen RW gestoppt, während das Endlos-Förderband WFE-Fb das Paket übernimmt.

In einer Ausgestaltung ist ein Abschnitt des ersten Sortierausgangs Ses.1.1, ..., Ses.1.10 schräg abschüssig geneigt. Das vorderste Paket in diesem ersten Sortierausgang rutscht den geneigten Abschnitt hinunter und wird danach durch die Reibung abgebremst, so dass dieses vorderste Paket das Endlos-Förderband WFE-Fb erreicht. Die nachfolgenden Pakete werden zurückgehalten.

Die Wagen-Förder-Einrichtung WFE kann auch eine Abfolge von angetriebenen Rollen aufweisen. Die Längsachsen dieser Rollen verlaufen alle parallel zu den Führungsschienen Fs.1, Fs.2. Ein Paket wird aus einem ersten Sortierausgang Sets.1.1, ..., Ses.1.10 auf die Wagen-Förder-Einrichtung WFE geschoben oder rutscht auf die Wagen-Förder-Einrichtung WFE und wird von den gedrehten Rollen weiter gefördert.

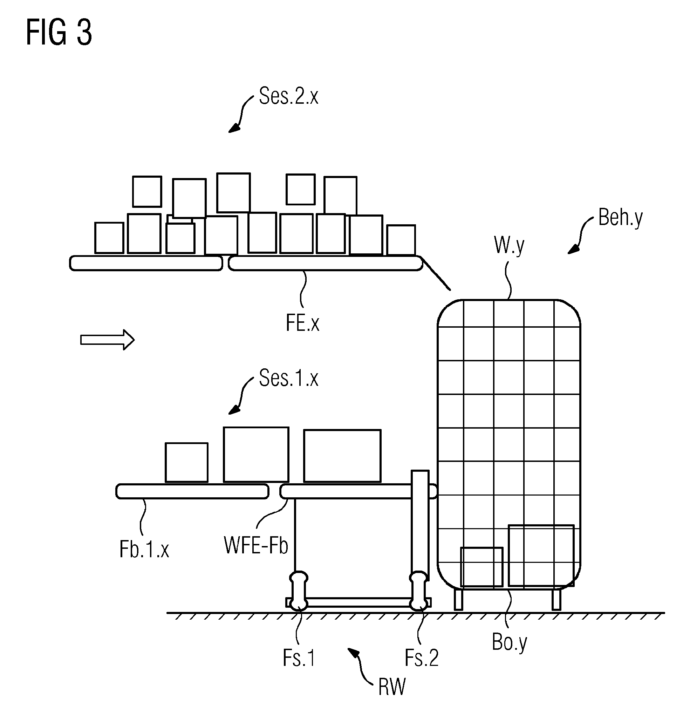

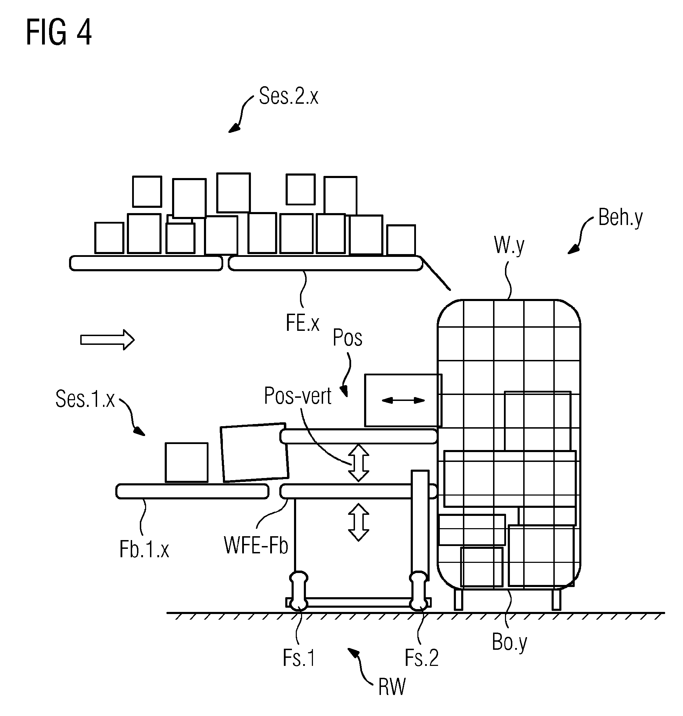

Fig. 3 und Fig. 4 zeigen
- den Rollwagen RW,
- einen ersten Sortierausgang Ses.1.x,
- einen zweiten Sortierausgang Ses.2.x und
- einen aufnehmenden Behälter Beh.y in Vorderansicht.

Dargestellt sind der Boden Bo.y sowie eine gitterförmige Seitenwand W.y des Rollbehälters Beh.y.

Die Führungsschienen Fs.1, Fs.2 und damit der Transportpfad des Rollwagens RW stehen senkrecht auf den Zeichenebenen von Fig. 3 und Fig. 4.

Der Rollwagen RW besitzt im Ausführungsbeispiel
- ein Gestell Ge,
- die Wagen-Förder-Einrichtung WFE mit dem Endlos-Förderband WFE-Fb,
- eine stationäre Auflage-Komponente AK, die mit dem Gestell Ge verbunden ist und mindestens ein Paket aufzunehmen vermag,
- einen drehbar gelagerten Rahmen mit zwei parallelen Schienen F.1, F.2, der sich oberhalb der stationären Auflage-Komponente AK befindet und ein auf der stationären Auflage-Komponente AK liegendes Paket zu drehen vermag,
- eine Positioniereinheit Pos mit einer Auflagefläche, wobei die Positioniereinheit Pos und damit die Auflagefläche mechanisch mit dem Gestell Ge verbunden ist und seitlich, also quer zum Transportpfad, und in der Höhe verstellbar sind, und
- optional ein bewegliches Element oder eine Zunge Zu an der Positioniereinheit Pos, wobei diese Zunge Zu sich quer zum Transportpfad in einen Behälter hinein verschieben lässt.

Die Positioniereinheit Pos lässt sich in zwei Richtungen quer zum Transportpfad des Rollwagens RW verschieben, nämlich in die beiden Richtungen des Doppelpfeils Pos-Tr von Fig. 2, außerdem in zwei Richtungen parallel zum Transportpfad, nämlich in die beiden Richtungen des Doppelpfeils Pos-par. Außerdem lässt die Positioniereinheit Pos sich in der Höhe verstellen, also in zwei Richtungen senkrecht zur Zeichenebene von Fig. 2 und parallel zur Zeichenebene von Fig. 3 und somit in die beiden Richtungen des Doppelpfeils Pos-vert von Fig. 4. Im Ausführungsbeispiel hebt und senkt ein Stellantrieb des Rollwagens RW die Positioniereinheit Pos relativ zum Gestell Ge an und ab.

Vorgegeben wird eine Abmessungs-Schranke für Pakete. Zunächst wird der Fall beschrieben, dass ein Paket im ersten Sortierausgang Ses.1.x eine Abmessung - gesehen senkrecht zur Ausschleus-Richtung und damit in die Richtung des Transportpfads
- hat, welche kleiner als die Abmessungs-Schranke ist. Folgende Schritte werden durchgeführt:
- Wie gerade beschrieben, hat das Endlos-Förderband WFE-Fb des Wagens RW das Paket aus dem ersten Sortierausgang Ses.1.x gezogen, und das Paket liegt auf dem Endlos-Förderband WFE-Fb.
- Ein erster Schieber Abs.1 schiebt das Paket vom Endlos-Förderband WFE-Fb in die Richtung Tr.1 auf die Auflagefläche der abgesenkten Positioniereinheit Pos. Hierbei wird das Paket um eine gerade Strecke parallel zum Transportpfad verschoben. Möglich ist, bereits während dieses Verschiebens den Rollwagen RW entlang des Transportpfads zu bewegen. Der erste Schieber Abs.1 wird wieder in die Ausgangs-Position verbracht, und das Endlos-Förderband WFE-Fb vermag ein weiteres Paket aus einem ersten Sortierausgang Ses.1.x zu ziehen.
- Aktuell liegt das Paket auf der Auflagefläche der Positioniereinheit Pos. Eine Steuereinheit ermittelt eine Ablade-Position im zuvor ausgewählten Behälter Beh.y. Das Paket soll an diese Ablade-Position in den ausgewählten Behälter Beh.y verbracht werden. Vorzugsweise wertet eine Bildauswerteeinheit ein Abbild von dem Behälter Beh.y aus, um eine geeignete freie Ablage-Position im Behälter Beh.y zu finden.
- Der Wagen wird in eine Abgabe-Position bezüglich des ausgewählten Behälters Beh.y verbracht.
- Die Positioniereinheit Pos mit der Ablagefläche wird bei Bedarf seitlich (in die Richtung Pos-Tr von Fig. 2) und / oder vertikal (in die Richtung Pos-vert von Fig. 4) bewegt, damit die Auflagefläche mit dem abzugebenden Paket in die Nähe der freien Ablage-Position verbracht wird, ohne dass die Positioniereinheit Pos gegen ein Paket im Behälter Beh.y stößt.
- Bei Bedarf wird die Zunge Zu aus der Positioniereinheit Pos ausgefahren, so dass die Auflagefläche und die ausgefahrene Zunge Zu eine durchgehende Fläche bis zur ermittelten Ablade-Position bilden. Das Paket lässt sich über diese durchgehende Fläche bis zur Ablade-Position schieben.
- Ein zweiter Schieber Abs.2 schiebt das Paket von der Auflagefläche der Positioniereinheit Pos herunter auf die ausgewählte Ablage-Position. Hierbei wird das Paket um eine Strecke senkrecht zum Transportpfad verschoben, im Beispiel von Fig. 2 nach rechts. Der zweite Schieber Abs.2 wird danach wieder in seine Ausgangs-Position verbracht, so dass auf der Auflagefläche ein weiteres Paket Platz hat und der zweite Schieber Abs.2 dieses weitere Paket dann verschieben kann.

In der Ausführungsform, die Fig. 2 zeigt, besitzt die Positioniereinheit Pos eine Auflagefläche mit einer glatten Oberfläche, über die hinweg sich ein Paket so verschieben lässt, dass nur eine geringe der Verschiebung entgegengesetzte Reibungskraft auftritt. Jeder Schieber Abs.1, Abs.2 umfasst eine Platte oder einen Stab oberhalb dieser glatten Oberfläche sowie einen Antrieb, der diesen Stab bzw. diese Platte linear zu verschieben vermag.

In einer anderen Ausgestaltung wird die Oberfläche der Positioniereinheit Pos von mehreren zueinander parallelen Laufrollen gebildet, und der Stab bzw. die Platte des Schiebers Abs.1 Abs.2 schiebt das Paket über die Laufrollen hinweg.

In einer weiteren Ausgestaltung wird die Oberfläche der Positioniereinheit Pos von mehreren zueinander parallelen und angetriebenen Rollen gebildet. In einer Ausführungsform sind alle Drehachsen dieser Rollen parallel zum Transportpfad angeordnet. Der erste Schieber Abs.1 umfasst einen Stab und/oder eine Platte, welche ein Paket parallel zu den Längsachsen der Rollen über die Rollen hinweg verschieben. Vorzugsweise sind die Rollen bei diesem Verschieben gestoppt. Die Rollen selber fungieren als zweite Schieber Abs.2. Indem die Rollen gedreht werden, schieben die Rollen ein Paket quer zum Transportpfad von der Positioniereinheit Pos in einen Behälter Beh.y hinein.

In die Auflagefläche der Positioniereinheit Pos können auch mehrere Allseiten-Räder eingelassen sein. Die Wirkungsweise derartiger Allseiten-Räder wird z. B. in DE 102010015584 A1 beschrieben.

In einer weiteren Ausführungsform lässt sich die Positioniereinheit Pos - oder wenigstens die Auflagefläche der Positioniereinheit Pos - um eine Drehachse drehen, die parallel zum Transportpfad und auch parallel zu den Führungsschienen Fs.1, Fs.2 verläuft. Diese Drehachse ist z. B. mittig angeordnet oder nahe an derjenigen Kante der Auflagefläche der Positioniereinheit Pos, die der Reihe R mit Behälter-Stellplätzen zugewandt ist. Ein Antrieb vermag die Positioniereinheit Pos um diese Drehachse zu drehen. Wenn der Antrieb die Positioniereinheit Pos dreht, so rutscht ein Gegenstand von der Auflagefläche schräg abwärts in einen Behälter Beh.1, ..., Beh.10.

Nunmehr wird der Fall beschrieben, dass die Abmessung des Pakets - gesehen senkrecht zur Ausschleus-Richtung und in Richtung des Transportpfads - größer als die vorgegebene Abmessungs-Schranke ist. Weil die Abmessung größer als die Abmessungs-Schranke ist, ist das Paket um 90 Grad zu drehen. Dieses Paket wird nicht auf die Positioniereinheit Pos geschoben. Vielmehr wird die Positioniereinheit Pos angehoben, und ein nicht gezeigter Schieber schiebt das Paket auf die Auflage-Komponente AK unterhalb der Positioniereinheit Pos. Nach dem Verschieben befindet das Paket sich im Raum zwischen der Auflage-Komponente AK und der Auflagefläche der Positioniereinheit Pos. Das Paket wird nunmehr gedreht, während das Paket auf der Auflage-Komponente AK liegt und bevor das Paket in den Behälter Beh.y verbracht wird.

Folgende zusätzlichen Schritte werden durchgeführt:
- Bei Bedarf wird der Abstand zwischen den beiden Schienen F.1, F.2 der Dreheinheit vergrößert oder auch verkleinert.
- Die beiden Schienen F.1, F.2 werden - gesehen in Richtung des Transportpfads - links und rechts vom Paket auf der Auflage-Komponente AK positioniert.
- Die beiden Schienen F.1, F.2 werden danach synchronisiert um eine senkrechte Drehachse gedreht und drehen ihrerseits das zwischen ihnen befindliche Paket um 90 Grad.
- Ein dritter Schieber lässt sich parallel zu den Längsachsen der parallelen Schienen F.1, F.2 hin- und her bewegen, und zwar parallel zu den beiden Richtungen des Doppelpfeils Pos-Tr. In einer Ausgangs-Position befindet sich dieser dritte Schieber - gesehen in Richtung des Transportpfads - vor der Drehung der Schienen F.1, F.2 am vom Endlos-Förderband WFE-Fb abgewandten Ende der beiden Schienen F.1, F.2 und wird durch die Drehung der Schienen um 90 Grad in eine Position links oder rechts von den Schienen gedreht. Das gedrehte Paket liegt weiterhin auf der Auflage-Komponente AK und befindet sich im Raum zwischen den beiden Schienen F.1, F.2 und dem dritten Schieber.

Der dritte Schieber kann wiederum ein Stab oder eine Platte sowie einen Antrieb umfassen oder aber Laufrollen oder angetriebene Rollen.

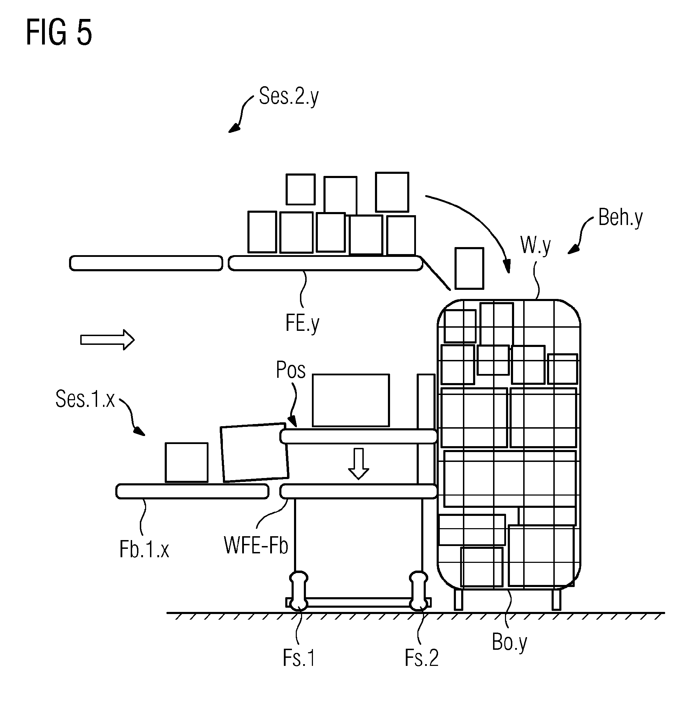

In der Situation von Fig. 5 werden aus dem ersten Sortierausgang Ses.1.x keine Pakete mehr in den Behälter Beh.y verbracht. Auf der Positioniereinheit Pos liegt ein Paket für einen anderen Behälter. Der Rollwagen RW wurde bereits entlang der Führungsschienen Fs.1, Fs.2 in eine Richtung senkrecht zur Zeichenebene von Fig. 5 bewegt. Das Förderelement FE.y transportiert Pakete aus den zweiten Sortierausgang Ses.2.y in den Behälter Beh.y.

In der bislang beschriebenen Ausgestaltung wird der Rollwagen RW von zwei Führungsschienen Fs.1, Fs.2 auf den Transportpfad zwischen den ersten Sortierausgängen Ses.1.1, ..., Ses.1.10 auf der einen Seite und der Reihe R mit den Behälter-Stellplätzen auf der anderen Seite gehalten. Auch andere Ausgestaltungen der Führungs-Einrichtung sind denkbar, wobei diese anderen Ausgestaltungen ohne Führungsschienen auskommen. Beispielsweise misst ein Sensor laufend die aktuelle Position des Rollwagens RW. Die gemessenen Positionen werden an eine datenverarbeitende Steuereinheit übermittelt. Diese Steuereinheit steuert eine Aktorik an Bord des Rollwagens RW an. Die Aktorik hält den bewegten Rollwagen RW auf den Transportpfad. Als Sensor wird beispielsweise eine Abfolge von Abstandssensoren entlang des Transportpfads verwendet. Jeder Abstandssensor misst berührungslos den Abstand zwischen sich und dem Rollwagen RW. Dadurch wird die aktuelle Position des Rollwagens RW laufend gemessen. Der Sensor kann auch eine Kamera und eine Bildauswerteeinheit umfasst. Die Kamera erzeugt laufend Abbilder von dem Transportpfad mit dem Rollwagen. Die Bildauswerteeinheit ermittelt die laufende Position des Rollwagens RW sowie eine Abweichung von einer geforderten Position des Rollwagens RW auf dem Transportpfad.

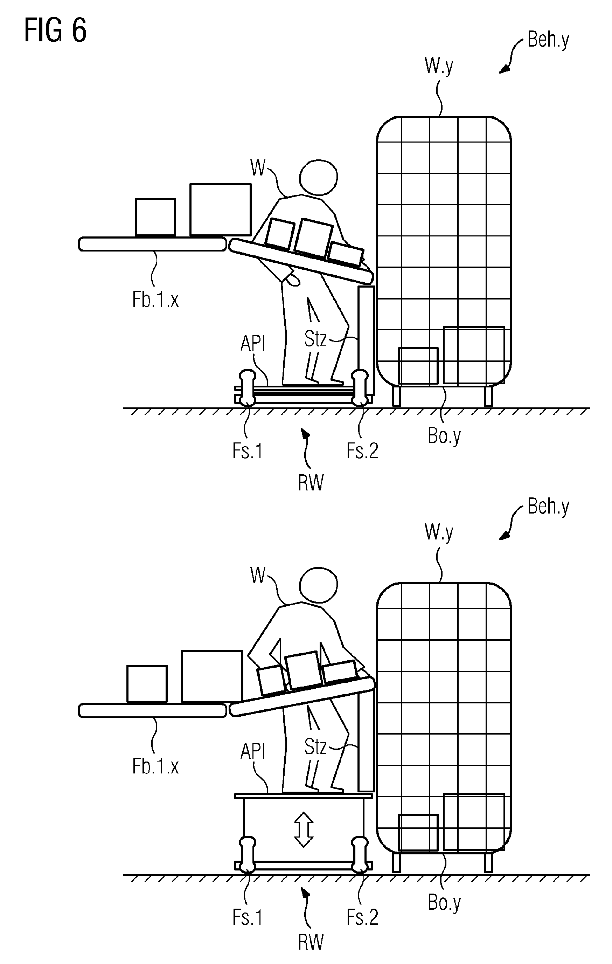

Fig. 6 und Fig. 7 zeigen eine andere Ausgestaltung des Rollwagens RW. Fig. 6 zeigt diese Ausgestaltung in einer Vorderansicht, bei der die Längsachse der Führungsschienen Fs.1, Fs.2 senkrecht auf der Zeichenebene von Fig. 6 stehen. Fig. 7 zeigt die Anordnung von Fig. 6 in einer Seitenansicht, und die Führungsschienen Fs.1, Fs.2 liegen in der Zeichenebene von Fig. 7. Das Fahrwerk des Rollwagens RW umfasst die Räder Rad.1, Rad.2. Ein Werker W steht auf einer Arbeitsplattform APl und kann die Arbeitsplattform APl in der Höhe verstellen. Das Förderband Fb.1.x transportiert Pakete aus dem ersten Sortierausgang Ses.1.x auf den ausgewählten Behälter Beh.y zu. Der Werker W verschiebt diese Pakete weiter in den Behälter Beh.y hinein. Eine Verlängerung des Förderbands Fb.1.x liegt auf einer Stütze Stz, die mechanisch mit der Arbeitsplattform APl verbunden ist. Dadurch wird diese Verlängerung angehoben oder abgesenkt, wenn der Werker W die Arbeitsplattform APl anhebt oder absenkt.

In Fig. 6 und Fig. 7 sind der zweite Sortierausgang Ses.2.x und das Förderelement FE.x fortgelassen.

**Bezugszeichenliste**

| *Bezugszeichen* | *Bedeutung* |
|---|---|
| Abs.1 | erster Schieber, verschiebt ein Paket vom Förderband WFE-Fb auf die Positioniereinheit Pos oder auf die Auflage-Komponente AK |
| Abs.2 | zweiter Schieber, schiebt ein Paket von der Positioniereinheit Pos in einen ausgewählten Behälter Beh.1, ..., Beh.10 |
| AK | stationäre Auflage-Komponente des Rollwagens RW, nimmt große Pakete auf |
| APl | höhenverstellbare Arbeitsplattform für den Werker W des Rollwagens RW |
| Beh.1, ..., Be.10 | Behälter auf Behälter-Stellplätzen der Reihe R, fungieren als die aufnehmenden Stationen |
| Bo.y | Boden des Rollbehälters Beh.y |
| F.1, F.2 | Schienen des Rahmens auf der stationären Auflage-Komponente AK, drehen ein großes Paket um 90 Grad |
| Fb.1.1, ..., Fb.1.10 | ausschleusende Förderbänder der ersten Sortierausgänge Ses.1.1, ..., Ses.1.10 |
| FE.1, ... FE.10 | Förderelemente der Förder-Einrichtung, fördern Pakete aus den zweiten Sortierausgängen Ses.2.1, ..., Ses.2.10 in die Behälter Beh.1, ..., Be.10 |
| Fs.1, Fs.2 | Führungsschienen für den Rollwagen RW |
| Ge | Gestell des Rollwagens RW |
| HS-Fb | Horizontal-Förderband des Hauptsortierers, bedient alle ersten Sortierausgänge Ses.1.1, ..., Ses.1.10 und alle zweiten Sortierausgänge Ses.2.1, ..., Ses.2.10 |
| Pos | höhenverstellbare und seitlich verschwenkbare Positioniereinheit oberhalb der Auflage-Komponente AK, trägt die Zunge Zu |
| Pos-par | Richtungen parallel zu den Führungsschienen Fs.1 Fs.2, in welche sich die Positioniereinheit Pos verschieben lässt |
| Pos-Tr | Richtungen quer zu den Führungsschienen Fs.1, Fs.2, in welche sich die Positioniereinheit Pos verschieben lässt |
| Pos-vert | vertikale Richtungen, in welche sich die Positioniereinheit Pos anheben und absenken lässt |
| R | Reihe von Behälter-Stellplätzen für die Behälter Beh.1, ..., Beh.10 |
| Rad.1, Rad.2 | Räder des Fahrwerks des Rollwagens RW |
| Ru.1.1, ..., Ru.1.10 | Rutschen der ersten Sortierausgänge Sets.1.1, ... Ses.1.10, führen Pakete zu den Förderbändern Bb.1.1, ... Fb.1.10 |
| RW | Rollwagen mit der stationären Auflage-Komponente AK und der Positioniereinheit Pos |
| Ses.1.1, ..., Ses.1.10 | erste Sortierausgänge, Sortierendstellen für schwere und für große Pakete, fungieren als die ersten abgebenden Stationen |
| Sets.2.1, ..., Ses.2.10 | zweite Sortierausgänge, Sortierendstellen für leichte und kleine Pakete, fungieren als die zweiten abgebenden Stationen |
| Stz | Stütze für die Verlängerung des Förderbands Fb.1.x des ersten Sortierausgangs Ses.1.x |
| Tr.1, Tr.2 | Transportrichtungen, in welche sich der Rollwagen RW entlang der Führungsschienen Fs.1, Fs.2 verschieben lässt |
| W | Werker auf der Arbeitsplattform APl |
| W.y | gitterförmige Seitenwand des Rollbehälters Beh.y |
| WFE | Wagen-Förder-Einrichtung mit dem Förderband WFE-Fb, gehört zum Rollwagen RW |
| WFE-Fb | Endlos-Förderband der Wagen-Förder-Einrichtung WFE, nimmt ein Paket aus einem ersten Sortierausgang Ses.1.1, ..., Ses.1.10 auf |
| WFE-Tr | Transportrichtung, in welche das Förderband WFE-Tr ein Paket aus einem ersten Sortierausgang Ses.1.1, ..., Ses.1.10 abzieht |
| Zu | seitlich verschiebbare Zunge an der Positioniereinheit Pos |

## Patentansprüche

1. Transport-Vorrichtung zum Transportieren von mehreren Gegenständen aus einer abgebenden Einrichtung in eine aufnehmende Einrichtung,
wobei die abgebende Einrichtung
- mindestens zwei erste abgebende Stationen (Ses.1.1, ..., Ses.1.10) aufweist, die horizontal oder schräg nebeneinander angeordnet sind, und
- mindestens zwei zweite abgebende Stationen (es.2.1, ..., Ses.2.10) aufweist, die horizontal oder schräg nebeneinander angeordnet sind, wobei die ersten abgebenden Stationen (Ses.1.1, ..., Ses.1.10) räumlich getrennt und/oder durch eine physikalische Eigenschaft von den zweiten abgebenden Stationen (Ses.2.1, ..., Ses.2.10) unterschieden sind, und wobei die aufnehmende Einrichtung mindestens zwei aufnehmende Stationen (Beh.1, ..., Beh.10) aufweist, die horizontal oder schräg nebeneinander angeordnet sind, und die Transport-Vorrichtung
- einen Wagen (RW) mit einer Auflage-Komponente (Pos, AK) und
- eine Führungs-Einrichtung (Fs.1 Fs.2) aufweist, wobei die Führungs-Einrichtung (Fs.1 Fs.2) dazu ausgestaltet ist, den Wagen (RW) entlang eines Transportpfads zu führen, wobei der Transportpfad für den Wagen (RW) sich zwischen den ersten abgebenden Stationen (Ses.1.1, ..., Ses.1.10) auf der einen Seite des Transportpfades und den aufnehmenden Stationen (Beh.1, ..., Beh.10) auf der anderen, gegenüberliegenden, Seite des Transportpfades befindet, der Wagen (RW) sich beim Geführt-Werden entlang des Transportpfads
- bezüglich jeder ersten abgebenden Station (Ses.1.1, ..., Ses.1.10) in eine Aufnahme-Position verbringen lässt, in welcher sich ein Gegenstand aus dieser ersten abgebenden Station (Ses.1.1, ..., Ses.1.10) auf die Auflage-Komponente (Pos, AK) verbringen lässt, und
- bezüglich jeder aufnehmenden Station (Beh.1, ..., Beh.10) in eine Abgabe-Position verbringen lässt, in der sich ein auf der Auflage-Komponente (Pos, AK) befindlicher Gegenstand in diese aufnehmende Station (Beh.1, ..., Beh.10) verbringen lässt, **dadurch gekennzeichnet, dass** die Transport-Vorrichtung weiterhin
- eine Förder-Einrichtung (FE.1, ..., FE.10)aufweist, wobei die Förder-Einrichtung (FE.1, ..., FE.10) dazu ausgestaltet ist, einen Gegenstand aus einer zweiten abgebenden Station (Ses.2.1, ..., Ses.2.10) in eine aufnehmenden Station (Beh.1, ..., Beh.10) zu verbringen.

2. Transport-Vorrichtung nach Anspruch 1,
**dadurch gekennzeichnet, dass**
der Wagen (RW) eine Wagen-Förder-Einrichtung (WFE) aufweist und
diese Wagen-Förder-Einrichtung (WFE) dazu ausgestaltet ist,
dann, wenn der Wagen (RW) sich in einer Aufnahme-Position bezüglich einer ersten abgebenden Station (Ses.1.1, ..., Ses.1.10) befindet,
einen Gegenstand durch eine Bewegung quer zum Transportpfad aus der ersten abgebenden Station (Ses.1.1, ..., Ses.1.10) heraus und auf den Wagen (RW) zu ziehen.

3. Transport-Vorrichtung nach Anspruch 2,
**dadurch gekennzeichnet, dass**
die Wagen-Förder-Einrichtung (WFE) räumlich von der Auflage-Komponente (Pos, AK) getrennt ist,
der Wagen (RW) einen ersten Schieber (Abs.1) aufweist und der erste Schieber (Abs.1) dazu ausgestaltet ist, einen Gegenstand, der auf der Wagen-Förder-Einrichtung (WFE) liegt,
durch eine Bewegung parallel zum Transportpfad von der Wagen-Förder-Einrichtung (WFE) auf die Auflage-Komponente (Pos, AK) zu verschieben.

4. Transport-Vorrichtung nach Anspruch 2,
**dadurch gekennzeichnet, dass**
die Auflage-Komponente (Pos, AK) des Wagens (RW) von einer Oberfläche der Wagen-Förder- Einrichtung (WFE) gebildet wird.

5. Transport-Vorrichtung nach einem der Ansprüche 1 bis 4, **dadurch gekennzeichnet, dass**
die Auflage-Komponente (Pos, AK)
- sich in vertikaler Richtung verstellen lässt und/oder
- sich in eine seitliche Richtung quer zum Transportpfad verschieben lässt.

6. Transport-Vorrichtung nach einem der Ansprüche 1 bis 5, **dadurch gekennzeichnet, dass**
der Wagen (RW) einen zweiten Schieber (Abs.2) aufweist, der zweite Schieber (Abs.2) dazu ausgestaltet ist, dann, wenn der Wagen (RW) sich in einer Abgabe-Position bezüglich einer aufnehmenden Station (Beh.1, ..., Beh.10) befindet,
durch eine Bewegung quer zum Transportpfad einen Gegenstand von der Auflage-Komponente (Pos, AK) herunter in die aufnehmende Station (Beh.1, ..., Beh.10) zu schieben.

7. Transport-Vorrichtung nach einem der Ansprüche 1 bis 6, **dadurch gekennzeichnet, dass**
die Auflage-Komponente (Pos, AK) ein in zwei Richtungen bewegliches Element (Zu) umfasst,
das bewegliche Element (Zu)
- sich in eine Ausfahr-Richtung senkrecht zum Transportpfad ausfahren und
- dadurch dann, wenn der Wagen (RW) sich in einer Abgabe-Position bezüglich einer aufnehmenden Station (Beh.1, ..., Beh.10) befindet, in diese aufnehmende Station (Beh.1, ..., Beh.10) hinein bewegen lässt und das bewegliche Element (Zu) sich in die zur Ausfahr-Richtung entgegengesetzte Richtung aus dieser aufnehmenden Station (Beh.1, ..., Beh.10) herausziehen lässt.

8. Transport-Vorrichtung nach einem der Ansprüche 1 bis 7, **dadurch gekennzeichnet, dass**
die Auflage-Komponente (Pos, AK) um eine Drehachse drehbar gelagert ist,
wobei diese Drehachse parallel zum Transportpfad verläuft, und
der Wagen (RW) dazu ausgestaltet ist,
einen auf der Auflage-Komponente (Pos, AK) befindlichen Gegenstand dadurch in eine aufnehmende Station (Beh.1, ..., Beh.10) zu verbringen, dass
- ein Antrieb die Auflage-Komponente (Pos, AK) um die Drehachse dreht und
- der Gegenstand von der gedrehten Auflage-Komponente in die aufnehmende Station (Beh.1, ..., Beh.10) rutscht.

9. Transport-Vorrichtung nach einem der Ansprüche 1 bis 8, **dadurch gekennzeichnet, dass**
die Auflage-Komponente (Pos, AK) höhenverstellbar ist und die Auflage-Komponente (Pos, AK)
- einen ersten auf der Auflage-Komponente (Pos, AK) liegenden Gegenstand in einer ersten Höhe in eine erste aufnehmende Station (Beh.1, ..., Beh.10) zu verbringen vermag und
- einen zweiten auf der Auflage-Komponente (Pos, AK) liegenden Gegenstand in einer zweiten Höhe, die über der ersten Höhe liegt, in die erste oder in eine weitere aufnehmende Station (Beh.1, ..., Beh.10) zu verbringen vermag.

10. Transport-Vorrichtung nach einem der Ansprüche 1 bis 9,
**dadurch gekennzeichnet, dass**
die Förder-Einrichtung (FE.1, ..., FE.10) so angeordnet ist, dass sie einen Gegenstand aus einer zweiten abgebenden Station (Ses.2.1, ..., Ses.2.10)
über die Führungs-Einrichtung (Fs.1 Fs.2) hinweg in eine aufnehmende Station (Beh.1, ..., Beh.10) zu verbringen vermag.

11. Transport-Vorrichtung nach einem der Ansprüche 1 bis 10,
**dadurch gekennzeichnet, dass**
die Förder-Einrichtung mindestens zwei Förder-Elemente (FE.1, ..., FE.10) umfasst und
jedes Förder-Element (FE.1, ..., FE.10)
- jeweils einer zweiten abgebenden Station (Ses.2.1, ..., Ses.2.10) zugeordnet ist und
- dazu ausgestaltet ist, einen Gegenstand aus der zugeordneten zweiten abgebenden Station (Ses.2.1, ..., Ses.2.10) in eine aufnehmende Station (Beh.1, ..., Beh.10) zu verbringen.

12. Anordnung zum Sortieren von mehreren Gegenständen nach
einem vorgegebenen Sortiermerkmal,
wobei die Anordnung
- eine abgebende Einrichtung mit mindestens zwei ersten abgebenden Stationen (Ses.1.1, ..., Ses.1.10) und mindestens zwei zweiten abgebenden Stationen (Ses.2.1, ..., Ses.2.10),
- eine aufnehmende Einrichtung mit mindestens zwei aufnehmenden Stationen (Beh.1, ..., Be.10),
- eine Mess-Einrichtung,
- eine Auswahleinheit und
- eine Transport-Vorrichtung gemäß einem der Ansprüche 1 bis 11
aufweist,
wobei die Mess-Einrichtung dazu ausgestaltet ist,
- für jeden zu sortierenden Gegenstand zu messen, welchen Wert das vorgegebene Sortiermerkmal für diesen Gegenstand annimmt, und
- für jeden zu sortierenden Gegenstand mindestens eine physikalische Eigenschaft dieses Gegenstands zu messen, die Auswahleinheit dazu ausgestaltet ist, für jeden Gegenstand automatisch
- abhängig vom gemessenen Sortiermerkmals-Wert für den Gegenstand sowohl eine erste abgebende Station (Ses.1.1, ..., Ses.1.10) als auch eine zweite abgebende Station (Ses.2.1, ..., Ses.2.10) vorauszuwählen,
- abhängig von der gemessenen physikalischen Eigenschaft für den Gegenstand entweder die vorausgewählte erste abgebende Station (Ses.1.1, ..., Ses.1.10) oder die vorausgewählte zweite abgebende Station (Ses.2.1, ..., Ses.2.10) auszuwählen und
die Anordnung dazu ausgestaltet ist,
jeden zu sortierenden Gegenstand in die von der Auswahleinheit ausgewählte abgebende Station (Ses.1.1, ...,
Ses.2.10) zu verbringen und
die Transport-Vorrichtung dazu ausgestaltet ist,
die zu sortierenden Gegenstände aus der ausgewählten abgebenden Station (Ses.1.1, ..., Ses.2.10) in eine aufnehmende Station (Beh.1, ..., Beh.10) einer aufnehmenden Einrichtung zu transportieren.

13. Anordnung nach Anspruch 12, **dadurch gekennzeichnet, dass**
- jede erste abgebende Station (Ses.1.1, ..., Ses.1.10) sich in einer ersten Ebene befindet,
- jede zweite abgebende Station (Ses.2.1, ..., Ses.2.10) sich in einer zweiten Ebene befindet,
- die zweite Ebene sich oberhalb der ersten Ebene befindet und
- die aufnehmenden Stationen (Beh.1, ..., Be.10) sich ebenfalls in dieser ersten Ebene befinden.

14. Verfahren zum Transportieren von mehreren Gegenständen
aus einer abgebenden Einrichtung in eine aufnehmende Einrichtung, wobei
die abgebende Einrichtung
- mindestens zwei erste abgebende Stationen (Ses.1.1, ..., Ses.1.10) aufweist, die horizontal oder schräg nebeneinander angeordnet sind, und
- mindestens zwei zweite abgebende Stationen (Ses.2.1, ..., Ses.2.10) aufweist, die horizontal oder schräg nebeneinander angeordnet sind,
die aufnehmende Einrichtung mindestens zwei aufnehmende Stationen (Beh.1, ..., Beh.10) aufweist, die horizontal oder schräg nebeneinander angeordnet sind, und
das Verfahren die Schritte umfasst, dass jeder zu transportierende Gegenstand dann, wenn er sich in einer zweiten abgebenden Station (Ses.2.1, ..., Ses.2.10) befindet,
aus dieser zweiten abgebenden Station (Ses.2.1, ..., Ses.2.10) an einem Wagen (RW) vorbei oder über den Wagen (RW) hinweg von einer Förder-Einrichtung (FE.1, ..., FE.10) in eine aufnehmende Station (Beh.1, ..., Beh.10) transportiert wird, und
jeder zu transportierende Gegenstand dann, wenn er sich in einer ersten abgebenden Station (Ses.1.1, ..., Ses.1.10) befindet,
- aus dieser ersten abgebenden Station (Ses.1.1, ..., Ses.1.10) auf eine Auflage-Komponente (Pos, AK) des Wagens (RW) verbracht wird und
- der Wagen (RW) den auf der Auflage-Komponente (Pos, AK) befindlichen Gegenstand in eine aufnehmende Station (Beh.1, ..., Beh.10) verbringt,
- wobei der Wagen (RW) durch eine Führungs-Einrichtung (Fs.1 Fs.2) entlang eines Transportpfads geführt wird,
- wobei dieser Transportpfad sich zwischen den ersten abgebenden Stationen (Ses.1.1, ..., Ses.1.10) auf der einen Seite des Transportpfades und den aufnehmenden Stationen (Beh.1, ..., Beh.10) auf der anderen, gegenüberliegenden, Seite des Transportpfades befindet,
wobei beim Schritt, den Gegenstand aus der ersten abgebenden Station (Ses.1.1, ..., Ses.1.10) auf die Auflage-Komponente (Pos, AK) zu verbringen,
der Wagen (RW) durch eine Bewegung entlang des Transportpfads in eine Aufnahme-Position der ersten abgebenden Station (Ses.1.1, ..., Ses.1.10) verbracht wird und
beim Schritt, den Gegenstand vom Wagen (RW) in die aufnehmende Station (Beh.1, ..., Beh.10) zu verbringen,
der Wagen (RW) durch eine Bewegung entlang des Transportpfads in eine Abgabe-Position bezüglich der aufnehmenden Station (Beh.1 ..., Beh.10) verbracht wird.

15. Verfahren zum Sortieren von Gegenständen nach einem vorgegebenen Sortiermerkmal
unter Verwendung einer abgebenden Einrichtung und einer aufnehmenden Einrichtung,
wobei die abgebende Einrichtung
- mindestens zwei erste abgebende Stationen (Ses.1.1, ..., Ses.1.10) aufweist, die horizontal oder schräg nebeneinander angeordnet sind, und
- mindestens zwei zweite abgebende Stationen (Ses.2.1, ..., Ses.2.10) aufweist, die horizontal oder schräg nebeneinander angeordnet sind,
die aufnehmende Einrichtung mindestens zwei aufnehmende Stationen (Beh.1, ..., Beh.10) aufweist, die horizontal oder schräg nebeneinander angeordnet sind, und
wobei das Verfahren die Schritte umfasst, dass für jeden Gegenstand
- gemessen wird, welchen Wert das Sortiermerkmal für diesen Gegenstand annimmt,
- eine physikalische Eigenschaft des Gegenstands gemessen wird,
- abhängig vom gemessenen Sortiermerkmals-Wert automatisch sowohl eine erste abgebende Station (Ses.1.1, ..., Ses.1.10) als auch eine zweite abgebende Station (Ses.2.1, ..., Ses.2.10) vorausgewählt werden,
- automatisch abhängig von der gemessenen physikalischen Eigenschaft entweder die vorausgewählte erste abgebende Station (Ses.1.1, ..., Ses.1.10) oder die vorausgewählte zweite abgebende Station (Ses.2.1, ..., Ses.2.10) ausgewählt wird und
- der Gegenstand in die ausgewählte abgebende Station (Ses.1.1, ..., Ses.2.10) transportiert wird und
wobei die zu sortierenden Gegenstände durch Anwendung eines Verfahrens gemäß Anspruch 14 aus der ausgewählten abgebenden Station (Ses.1.1, ..., Ses.2.10) in die aufnehmende Station (Beh.1, ..., Beh.10) transportiert werden.

## Claims

1. Transport device for transporting a number of articles from a distributing apparatus into a receiving apparatus, wherein the distributing apparatus
- has at least two first distributing stations (Ses.1.1, ..., Ses.1.10), which are arranged horizontally or obliquely adjacent to one another, and
- at least two second distributing stations (Ses.2.1, ..., Ses.2.10), which are arranged horizontally or obliquely adjacent to one another,
wherein the first distributing stations (Ses.1.1, ..., Ses.1.10) are physically separate and/or differ from the second distributing stations (Ses.2.1, ..., Ses.2.10) by means of a physical property, and wherein
the receiving apparatus has at least two receiving stations (Beh.1, ..., Beh.10), which are arranged horizontally or obliquely adjacent to one another,
and the transport device has
- a carriage (RW) with a support component (Pos, AK) and
- a guide apparatus (Fs.1 Fs.2),
wherein the guide apparatus (Fs.1, Fs.2) is designed to guide the carriage (RW) along a transport path,
wherein the transport path for the carriage (RW) is disposed between the first distributing stations (Ses.1.1, ..., Ses.1.10) on the one side of the transport path and the receiving stations (Beh.1, ..., Beh.10) on the other opposing side of the transport path,
the carriage (RW), while being guided along the transport path,
- in respect of each first distributing station (Ses.1.1, ..., Ses.1.10), can be transferred into a receiving position, in which an article can be transferred from this first distributing station (Ses.1.1, ..., Ses.1.10) onto the support component (Pos, AK), and
- in respect of each receiving station (Beh.1, ..., Beh.10), can be transferred into a distribution position, in which an article disposed on the support component (Pos, AK) can be transferred into this receiving station (Beh.1, ..., Beh.10),
**characterised in that**
the transport device also has
- a conveyor (FE.1, ..., FE.10), wherein the conveyor (FE.1, ..., FE.10) is designed to transfer an article from a second distributing station (Ses.2.1, ..., Ses.2.10) into a receiving station (Beh.1, ..., Beh.10).

2. Transport device according to claim 1,
**characterised in that**
the carriage (RW) has a carriage conveyor (WFE) and
this carriage conveyor (WFE) is designed, if the carriage (RW) is disposed in a receiving position in respect of a first distributing station (Ses.1.1, ..., Ses.1.10),
then to extract an article from the first distributing station (Ses.1.1, ..., Ses.1.10) and onto the carriage (RW) by means of a movement at right angles to the transport path.

3. Transport device according to claim 2,
**characterised in that**
the carriage conveyor (WFE) is physically separate from the support component (Pos, AK),
the carriage (RW) has a first slide (Abs.1) and the first slide (Abs.1) is designed to displace an article, which rests on the carriage conveyor (WFE), from the carriage conveyor (WFE) onto the support component (Pos, AK) by means of movement parallel to the transport path.

4. Transport device according to claim 2,
**characterised in that**
the support component (Pos, AK) of the carriage (RW) is formed by a surface of the carriage conveyor (WFE).

5. Transport device according to one of claims 1 to 4, **characterised in that**
the support component (Pos, AK)
- can be adjusted in the vertical direction and/or
- can be displaced in a lateral direction at right angles to the transport path.

6. Transport device according to one of claims 1 to 5, **characterised in that**
the carriage (RW) has a second slide (Abs.2), the second slide (Abs.2) is designed, if the carriage (RW) is disposed in a distribution position in respect of a receiving station (Beh.1, ..., Beh.10),
then to slide an article off the support component (Pos, AK) into the receiving station (Beh.1, ..., Beh.10) by means of a movement at right angles to the transport path.

7. Transport device according to one of claims 1 to 6, **characterised in that**
the support component (Pos, AK) comprises an element (Zu) that can be moved in two directions,
the moveable element (Zu)
- extends in an extending direction perpendicular to the transport path and
- as a result, if the carriage (RW) is disposed in a distribution position in respect of a receiving station (Beh.1, ..., Beh.10), can then be moved into this receiving station (Beh.1, ..., Beh.10) and
the moveable element (Zu) can be extracted from this receiving station (Beh.1, ..., Beh.10) in the direction opposite to the extending direction.

8. Transport device according to one of claims 1 to 7, **characterised in that**
the support component (Pos, AK) is rotatably mounted about an axis of rotation,
wherein this axis of rotation runs in parallel to the transport path and
the carriage (RW) is designed
to transfer an article disposed on the support component (Pos, AK) into a receiving station (Beh.1, ..., Beh.10), such that
- a drive rotates the support component (Pos, AK) about the axis of rotation and
- the article slides from the rotated support component into the receiving station (Beh.1, ..., Beh.10).

9. Transport device according to one of claims 1 to 8, **characterised in that**
the support component (Pos, AK) is height-adjustable and the support component (Pos, AK)
- is able to transfer a first article resting on the support component (Pos, AK) at a first height into a first receiving station (Beh.1, ..., Beh.10) and
- is able to transfer a second article resting on the support component (Pos, AK) at a second height, which lies above the first height, into the first or into a further receiving station (Beh.1, ..., Beh.10).

10. Transport device according to one of claims 1 to 9, **characterised in that**
the conveyor (FE.1, ..., FE.10) is arranged such that it is able to transfer an article from a second distributing station (Ses.2.1, ..., Ses.2.10) across the conveyor (Fs.1 Fs.2) into a receiving station (Beh.1, ..., Beh.10).

11. Transport device according to one of claims 1 to 10, **characterised in that**
the conveyor comprises at least two conveyor elements (FE.1, ... , FE.10) and
each conveyor element (FE.1, ..., FE.10)
- is assigned to a second distributing station (Ses.2.1, ..., Ses.2.10) in each case and
- is designed to transfer an article from the assigned second distributing station (Ses.2.1, ..., Ses.2.10) into a receiving station (Beh.1, ..., Beh.10).

12. Arrangement for sorting a number of articles according to a predetermined sorting feature,
wherein the arrangement has
- a distributing apparatus with at least two first distributing stations (Ses.1.1, ..., Ses.1.10) and at least two second distributing stations (Ses.2.1, ..., Ses.2.10),
- a receiving apparatus with at least two receiving stations (Beh.1, ..., Beh.10),
- a measuring apparatus,
- a selection unit and
- a transport device according to one of claims 1 to 11, wherein the measuring apparatus is designed
- for each article to be sorted, to measure which value the predetermined sorting feature assumes for this article, and
- for each article to be sorted, to measure at least one physical property of this article,
the selection unit is designed, automatically for each article,
- to select both a first distributing station (Ses.1.1, ..., Ses.1.10) and also a second distributing station (Ses.2.1, ..., Ses.2.10) as a function of the measured sorting feature value for the article,
- to either select the preselected first distributing station (Ses.1.1, ..., Ses.1.10) or the preselected second distributing station (Ses.2.1, ..., Ses.2.10) as a function of the measured physical property for the article, and
the arrangement is designed
to transfer each article to be sorted into the distributing station (Ses.1.1, ..., Ses.2.10) selected by the selection unit, and
the transport device is designed
to transport the articles to be sorted from the selected distributing station (Ses.1.1, ..., Ses.2.10) into a receiving station (Beh.1, ..., Beh.10) of a receiving apparatus.

13. Arrangement according to claim 12,
**characterised in that**
- each first distributing station (Ses.1.1, ..., Ses.1.10) is disposed in a first plane,
- each second distributing station (Ses.2.1, ..., Ses.2.10) is disposed in a second plane,
- the second plane is disposed above the first plane, and
- the receiving stations (Beh.1, ..., Beh.10) are likewise disposed in this first plane.

14. Method for transporting a number of articles from a distributing apparatus into a receiving apparatus, wherein the distributing apparatus
- has at least two first distributing stations (Ses.1.1, ..., Ses.1.10), which are arranged horizontally or obliquely adjacent to one another, and
- at least two second distributing stations (Ses.2.1, ..., Ses.2.10), which are arranged horizontally or obliquely adjacent to one another,
the receiving apparatus has at least two receiving stations (Beh.1, ..., Beh.10), which are arranged horizontally or obliquely adjacent to one another and the method comprises the steps that
each article to be transported, if it is disposed in a second distributing station (Ses. 2.1, ..., Ses.2.10),
is then transported out of this second distributing station (Ses. 2.1, ..., Ses.2.10) past a carriage (RW) or across the carriage (RW) by a conveyor (FE.1, ..., FE.10) into a receiving station (Beh.1, ..., Beh.10), and
each article to be transported, if it is disposed in a first distributing station (Ses.1.1, ..., Ses.1.10)
- is then transferred out of this first distributing station (Ses.1.1, ..., Ses.1.10) onto a support component (Pos, AK) of the carriage (FW) and
- the carriage (RW) transfers the article disposed on the support component (Pos, AK) into a receiving station (Beh.1, ..., Beh.10),
- wherein the carriage (RW) is guided by a guide apparatus (Fs.1 Fs.2) along a transport path,
- wherein this transport path is disposed between the first distributing stations (Ses.1.1, ..., Ses.1.10) on the one side of the transport path and the receiving stations (Beh.1, ..., Beh.10) on the other opposing side of the transport path, wherein with the step of transferring the article out of the first distributing station (Ses.1.1, ..., Ses.1.10) onto the support component (Pos, AK),
the carriage (RW) is transferred by a movement along the transport path into a receiving position of the first distributing station (Ses.1.1, ..., Ses.1.10) and
with the step of transferring the article from the carriage (RW) into the receiving station (Beh.1, ..., Beh.10),
the carriage (RW) is transferred by a movement along the transport path into a distribution position in respect of the receiving station (Beh.1, ..., Beh.10).

15. Method for sorting articles according to a predetermined sorting feature,
using a distributing apparatus and a receiving apparatus, wherein the distributing apparatus
- has at least two first distributing stations (Ses.1.1, ..., Ses.1.10), which are arranged horizontally or obliquely adjacent to one another, and
- has at least two second distributing stations (Ses.2.1, ..., Ses.2.10), which are arranged horizontally or obliquely adjacent to one another,
the receiving apparatus has at least two receiving stations (Beh.1, ..., Beh.10), which are arranged horizontally or obliquely adjacent to one another, and
wherein the method comprises the steps that, for each article,
- it is measured which value the sorting feature assumes for this article,
- a physical property of the article is measured,
- both a first distributing station (Ses.1.1, ..., Ses.1.10) and also a second distributing station (Ses.2.1, ..., Ses.2.10) are automatically preselected as a function of the measured sorting feature value,
- either the preselected first distributing station (Ses. 1.1, ..., Ses.1.10) or the preselected second distributing station (Ses.2.1, ..., Ses.2.10)is automatically selected as a function of the measured physical property, and
- the article is transported into the selected distributing station (Ses.1.1, ..., Ses.2.10) and
wherein the articles to be sorted are transported out of the selected distributing station (Ses.1.1, ..., Ses.2.10) into the receiving station (Beh.1, ..., Beh.10) by applying a method according to claim 14.

## Revendications

1. Dispositif de transport permettant de transporter plusieurs objets depuis une installation de distribution jusqu'à une installation de réception,
étant entendu que l'installation de distribution :
- comprend au moins deux premiers postes de distribution (Ses.1.1, ..., Ses.1.10) agencés horizontalement ou en oblique l'un à côté de l'autre, et
- comprend au moins deux seconds postes de distribution (Ses.2.1, ..., Ses.2.10) disposés horizontalement ou en oblique l'un à côté de l'autre,
étant entendu que les premiers postes de distribution (Ses.1.1, ..., Ses.1.10) sont séparés spatialement et/ou différenciés des seconds postes de distribution (Ses.2.1, ..., Ses.2.10) par une caractéristique physique, et que l'installation de réception comprend au moins deux postes de réception (Beh.1, ..., Beh.10) agencés horizontalement ou en oblique l'un à côté de l'autre, et
que le dispositif de transport comprend :
- un chariot (RW) comprenant un composant support (Pos, AK), et
- une installation de guidage (Fs.1 Fs.2), étant entendu que l'installation de guidage (Fs.1 Fs.2) est configurée de manière à guider le chariot (RW) le long d'un trajet de transport ;
étant entendu que le trajet de transport destiné au chariot (RW) se trouve entre les premiers postes de distribution (Ses.1.1, ..., Ses.1.10) d'un côté du trajet de transport et les postes de réception (Beh.1, ..., Beh.10) de l'autre côté, opposé, du trajet de transport ;
que le chariot (RW), lors de son guidage le long du trajet de transport :
- peut être amené, par rapport à chaque premier poste de distribution (Ses.1.1, ..., Ses.1.10), sur une position de réception où un objet peut être transféré sur le composant support (Pos, AK) depuis ce premier poste de distribution (Ses.1.1, ..., Ses.1.10), et
- peut être amené, par rapport à chaque poste de réception (Beh.1, ..., Beh.10), sur une position de distribution où un objet se trouvant sur le composant support (Pos, AK) peut être transféré dans ce poste de réception (Beh.1, ..., Beh.10),
**caractérisé en ce que** le dispositif de transport :
- comprend par ailleurs une installation de manutention (FE.1, ..., FE.10), l'installation de manutention (FE.1, ..., FE.10) étant configurée de sorte à transférer un objet dans un poste de réception (Beh.1, ..., Beh.10) depuis un second poste de distribution (Ses.2.1, ..., Ses.2.10).

2. Dispositif de transport selon la revendication 1, **caractérisé en ce que** :
le chariot (RW) comprend une installation (WFE) de manutention de chariot et **en ce que**
cette installation (WFE) de manutention de chariot est configurée de telle sorte que,
lorsque le chariot (RW) se trouve sur une position de réception par rapport à un premier poste de distribution (Ses.1.1, ..., Ses.1.10),
elle sort un objet, par un mouvement transversal au trajet de transport, hors du premier poste de distribution (Ses.1.1, ..., Ses.1.10) et l'amène sur le chariot (RW).

3. Dispositif de transport selon la revendication 2, **caractérisé en ce que** :
l'installation (WFE) de manutention de chariot est séparée spatialement du composant support (Pos, AK),
**en ce que** le chariot (RW) comprend une première coulisse (Abs.1) et **en ce que** la première coulisse (Abs.1) est configurée de manière
à faire glisser un objet qui repose sur l'installation (WFE) de manutention de chariot,
de l'installation (WFE) de manutention de chariot sur le composant support (Pos, AK) par un mouvement parallèle au trajet de transport.

4. Dispositif de transport selon la revendication 2, **caractérisé en ce que** :
le composant support (Pos, AK) du chariot (RW) est constitué par une surface de l'installation (WFE) de manutention de chariot.

5. Dispositif de transport selon l'une des revendications 1 à 4,
**caractérisé en ce que** :
le composant support (Pos, AK)
- peut être décalé dans le sens vertical et/ou
- peut être déplacé dans une direction latérale transversale au trajet de transport.

6. Dispositif de transport selon l'une des revendications 1 à 5,
**caractérisé en ce que** :
le chariot (RW) comprend une seconde coulisse (Abs.2), la seconde coulisse (Abs.2) étant configurée de telle sorte que,
lorsque le chariot (RW) se trouve sur une position de distribution par rapport à un poste de réception (Beh.1, ..., Beh.10),
elle fait descendre un objet du composant support (Pos, AK) dans le poste de réception (Beh.1, ..., Beh.10) par un mouvement transversal au trajet de transport.

7. Dispositif de transport selon l'une des revendications 1 à 6,
**caractérisé en ce que** :
le composant support (Pos, AK) comporte un élément (Zu) mobile dans deux directions,
lequel élément mobile (Zu)
- peut être déployé dans une direction de déploiement perpendiculaire au trajet de transport et
- peut être amené de ce fait, lorsque le chariot (RW) se trouve dans une position de distribution par rapport à un poste de réception (Beh.1, ..., Beh.10), jusque dans ce poste de réception (Beh.1, ..., Beh.10), et
**en ce que** l'élément mobile (Zu) peut être retiré de ce poste de réception (Beh.1, ..., Beh.10) dans la direction opposée à la direction de déploiement.

8. Dispositif de transport selon l'une des revendications 1 à 7,
**caractérisé en ce que** :
le composant support (Pos, AK) est monté rotatif autour d'un axe de rotation,
étant entendu que cet axe de rotation court parallèlement au trajet de transport et que
le chariot (RW) est configuré de manière
à transférer un objet se trouvant sur le composant support (Pos, AK) dans un poste de réception (Beh.1, ..., Beh.10) du fait
- qu'un entraînement fait tourner le composant support (Pos, AK) autour de l'axe de rotation et
- que l'objet glisse du composant support pivoté dans le poste de réception (Beh.1, ..., Beh.10).

9. Dispositif de transport selon l'une des revendications 1 à 8,
**caractérisé en ce que** :
le composant support (Pos, AK) est réglable en hauteur et **en ce que** le composant support (Pos, AK)
- permet d'amener un premier objet reposant sur le composant support (Pos, AK) à une première hauteur dans un premier poste de réception (Beh.1, ..., Beh.10), et
- permet d'amener un second objet reposant sur le composant support (Pos, AK) à une seconde hauteur, située au-dessus de la première hauteur, dans le premier poste de réception ou dans un autre (Beh.1, ..., Beh.10).

10. Dispositif de transport selon l'une des revendications 1 à 9,
**caractérisé en ce que** :
l'installation de manutention (FE.1, ..., FE.10) est agencée de telle sorte qu'elle permet d'amener un objet depuis un second poste de distribution (Ses.2.1, ..., Ses.2.10) jusqu'à un poste de réception (Beh.1, ..., Beh.10) en passant par l'installation de guidage (Fs.1, Fs.2).

11. Dispositif de transport selon l'une des revendications 1 à 10,
**caractérisé en ce que** :
l'installation de manutention comporte au moins deux éléments de manutention (FE.1, ..., FE.10) et
**en ce que** chaque élément de manutention (FE.1, ..., FE.10)
- est rattaché à un second poste de distribution (Ses.2.1, ..., Ses.2.10) respectif, et
- est configuré de manière à amener un objet dans un poste de réception (Beh.1, ..., Beh.10) depuis le second poste de distribution (Ses.2.1, ..., Ses.2.10) auquel il est rattaché.

12. Agencement permettant de trier plusieurs objets selon une caractéristique de tri prédéfinie,
étant entendu que l'agencement
comprend
- une installation de distribution comportant au moins deux premiers postes de distribution (Ses.1.1, ..., Ses.1.10) et au moins deux seconds postes de distribution (Ses.2.1, ..., Ses.2.10) ;
- une installation de réception comportant au moins deux postes de réception (Beh.1, ..., Beh.10) ;
- une installation de mesure ;
- une unité de sélection, et
- un dispositif de transport selon l'une des revendications 1 à 11,
étant entendu que l'installation de mesure est configurée de manière :
- à mesurer, pour chaque objet à trier, la valeur que la caractéristique de tri prédéfinie prend pour cet objet, et
- à mesurer, pour chaque objet à trier, au moins une caractéristique physique de cet objet,
que l'unité de sélection est configurée de manière à ce que, pour chaque objet, il y ait automatiquement :
- présélection, en fonction de la valeur mesurée pour la caractéristique de tri de l'objet, tant d'un premier poste de distribution (Ses.1.1, ..., Ses.1.10) que d'un second poste de distribution (Ses.2.1, ..., Ses.2.10) ;
- sélection, en fonction de la caractéristique physique mesurée pour l'objet, soit du premier poste de distribution (Ses.1.1, ..., Ses.1.10) présélectionné, soit du second poste de distribution (Ses.2.1, ..., Ses.2.10) présélectionné, et
que l'agencement est configuré de manière à amener chaque objet à trier jusque dans le poste de distribution (Ses.1.1, ..., Ses.2.10) sélectionné par l'unité de sélection, et
que le dispositif de transport est configuré de manière à transporter les objets à trier depuis le poste de distribution (Ses.1.1, ..., Ses.2.10) sélectionné jusque dans un poste de réception (Beh.1 ..., Beh.10) d'une installation de réception.

13. Agencement selon la revendication 12,
**caractérisé :**
- **en ce que** chaque premier poste de distribution (Ses.1.1, ..., Ses.1.10) est situé dans un premier plan ;
- **en ce que** chaque second poste de distribution (Ses.2.1, ..., Ses.2.10) est situé dans un second plan ;
- **en ce que** le second plan est situé au-dessus du premier plan, et
- **en ce que** les postes de réception (Beh.1 ..., Beh.10) sont également situés dans ce premier plan.

14. Procédé de transport de plusieurs objets depuis une installation de distribution jusque dans une installation de réception, étant entendu
que l'installation de distribution :
- comprend au moins deux premiers postes de distribution (Ses.1.1, ..., Ses.1.10) agencés horizontalement ou en oblique l'un à côté de l'autre, et
- comprend au moins deux seconds postes de distribution (Ses.2.1, ..., Ses.2.10) agencés horizontalement ou en oblique l'un à côté de l'autre,
que l'installation de réception comprend au moins deux postes de réception (Beh.1, ..., Beh.10) agencés horizontalement ou en oblique l'un à côté de l'autre, et que le procédé comprend les étapes consistant en ce que chaque objet à transporter, lorsqu'il se trouve dans un second poste de distribution (Ses.2.1, ..., Ses.2.10),
est transporté par une installation de manutention (FE.1, ..., FE.10) depuis ce second poste de distribution (Ses.2.1, ..., Ses.2.10) jusque dans un poste de réception (Beh.1, ..., Beh.10) le long d'un chariot (RW) ou par-dessus le chariot (RW), et
en ce que chaque objet à transporter, lorsqu'il se trouve dans un premier poste de distribution (Ses. 1.1, ..., Ses.1.10),
- est amené depuis le premier poste de distribution (Ses.1.1, ..., Ses.1.10) sur un composant support (Pos, AK) du chariot (RW), et
- en ce que le chariot (RW) amène l'objet se trouvant sur le composant support (Pos, AK) jusque dans un poste de réception (Beh.1, ..., Beh.10),
- étant entendu que le chariot (RW) est guidé par une installation de guidage (Fs.1, Fs.2) le long d'un trajet de transport ;
- étant entendu que ce trajet de transport se trouve entre les premiers postes de distribution (Ses.1.1, ..., Ses.1.10) d'un côté du trajet de transport et les postes de réception (Beh.1, ..., Beh.10) de l'autre côté, opposé, du trajet de transport,
étant entendu que, dans l'étape consistant à amener l'objet sur le composant support (Pos, AK) depuis le premier poste de distribution (Ses.1.1, ..., Ses.1.10),
le chariot (RW) est amené sur une position de réception du premier poste de distribution (Ses.1.1, ..., Ses.1.10) par un mouvement le long du trajet de transport et que,
dans l'étape consistant à amener l'objet du chariot (RW) dans le poste de réception (Beh.1, ..., Beh.10),
le chariot (RW) est amené sur une position de distribution par rapport au poste de réception (Beh.1, ..., Beh.10) par un mouvement le long du trajet de transport.

15. Procédé de tri d'objets selon une caractéristique de tri prédéfinie
au moyen d'une installation de distribution et d'une installation de réception,
étant entendu que l'installation de distribution :
- comprend au moins deux premiers postes de distribution (Ses.1.1, ..., Ses.1.10) agencés horizontalement ou en oblique l'un à côté de l'autre, et
- comprend au moins deux seconds postes de distribution (Ses.2.1, ..., Ses.2.10) agencés horizontalement ou en oblique l'un à côté de l'autre,
que l'installation de réception comprend au moins deux postes de réception (Beh.1, ..., Beh.10) agencés horizontalement ou en oblique l'un à côté de l'autre, et étant entendu que le procédé comprend les étapes consistant en ce que, pour chaque objet à transporter :
- on mesure la valeur que la caractéristique de tri prend pour cet objet ;
- en ce que l'on mesure une caractéristique physique de l'objet ;
- en ce que tant un premier poste de distribution (Ses.1.1, ..., Ses.1.10) qu'un second poste de distribution (Ses.2.1, ..., Ses.2.10) sont présélectionnés automatiquement en fonction de la valeur mesurée pour la caractéristique de tri ;
- en ce que soit le premier poste de distribution (Ses.1.1, ..., Ses.1.10) présélectionné, soit le second poste de distribution (Ses.2.1, ..., Ses.2.10) présélectionné est automatiquement sélectionné en fonction de la caractéristique physique mesurée, et
- en ce que l'objet est transporté jusque dans le poste de distribution (Ses.1.1, ..., Ses.2.10) sélectionné, et étant entendu que les objets à trier sont transportés depuis le poste de distribution (Ses.1.1, ..., Ses.2.10) sélectionné jusque dans le poste de réception (Beh.1, ..., Beh.10) au moyen d'un procédé selon la revendication 14.
